# EUROPEAN PATENT APPLICATION

(11) **EP 2 667 311 A2**
(43) Date of publication of application: **27.11.2013**
(21) Application number: 13165331.3
(22) Date of filing: 25.04.2013
(51) Int. Cl.: G06F 13/36

(54) **Information processing apparatus, method of measuring delay difference, and delay difference measuring program**

(30) Priority: 22.05.2012 JP 2012116146
(71) Applicant: FUJITSU LIMITED, Kawasaki-shi, Kanagawa 211-8588 (JP)
(72) Inventor: Takehara, Masaru, Kanagawa, 211-8588 (JP)
(74) Representative: HOFFMANN EITLE

(57) **Abstract**

Each of the plurality of second processing units (20A, 20B) includes: a counter (22A, 22B) that counts a count value in synchronization with such a counter included in each remaining second processing unit; a register (23A, 23B) that holds the count value of the counter (22A, 22B); and a control unit (24A, 24B) that stores the count value, which is counted by the counter (22A, 22B) when receiving a measurement instruction from the first processing unit (10), as a receipt-timing count value into the register (23A, 23B) and notifies the first processing unit (10) of the held receipt-timing count value, and the first processing unit (10) calculates one or more differences between a plurality of the receipt-timing count values notified from the second processing units (20A, 20B) as a transmitting delay difference from the first processing unit (10) to each of the plurality of second processing units (20A, 20B).

## Description

### FIELD

The embodiment discussed herein is directed to an information processing apparatus, a method of measuring delay difference, and a delay difference measuring program.

### BACKGROUND

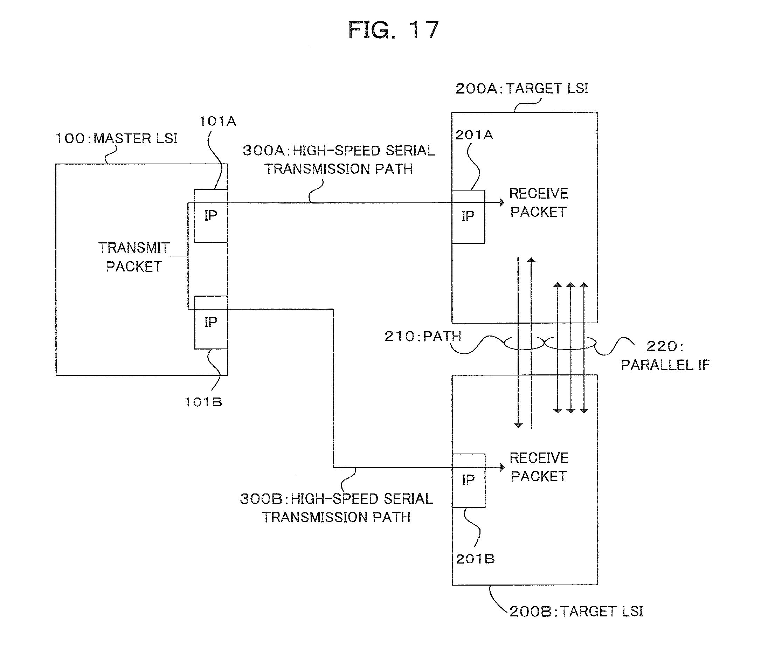

An information processing apparatus illustrated in FIG. 17 includes a master large scale integration (LSI; first processing unit) 100 and two target LSIs (second processing units) 200A and 200B that are operable according to packets from the master LSI 100. The master LSI 100 and the two target LSIs 200A and 200B each are connected to communicate with each other through high-speed serial transmission paths 300A and 300B. Note that, hereinafter, the "master LSI" may be simply called a "master" and the "target LSI" may be simply called a "target".

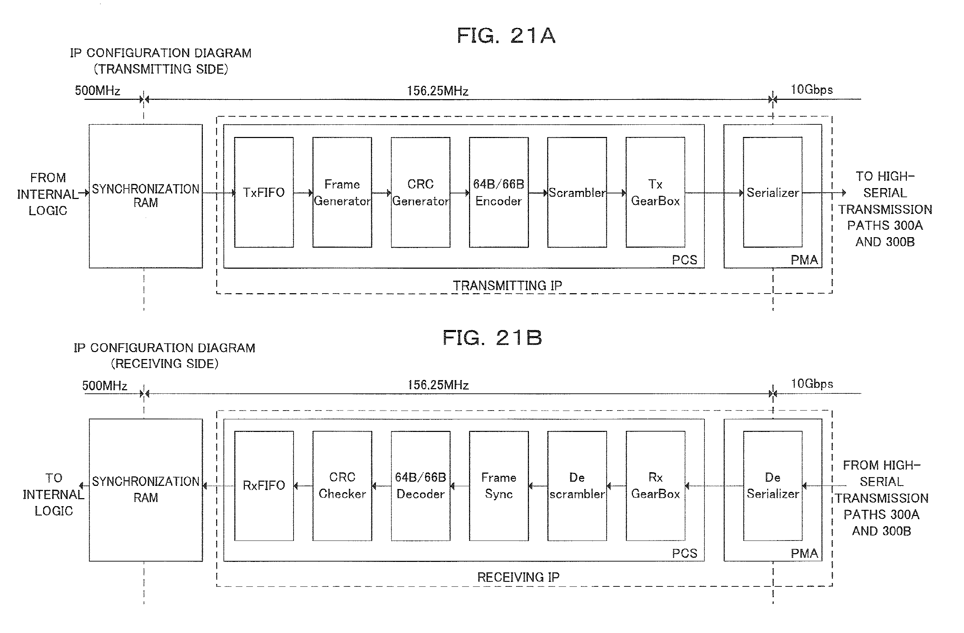

The high-speed serial transmission path 300A connects a transmitting and receiving unit (IP: intellectual property) 101A of the master 100 with a transmitting and receiving unit (IP) 201A of the target 200A. Similarly, the high-speed serial transmission path 300B connects a transmitting and receiving unit (IP) 101B of the master 100 with a transmitting and receiving unit (IP) 201B of the target LSI 200B. The transmitting and receiving units 101A, 101B, 201A, and 201B each include a parallel/serial (P/S) converting unit (transmitting unit) to be described with reference to FIG. 21A and an S/P converting unit (receiving unit) to be described with reference to FIG. 21B.

In the information processing apparatus illustrated in FIG. 17, packets are transmitted from the master 100 to two targets 200A and 200B through the high-speed serial transmission paths 300A and 300B and each of the targets 200A and 200B performs data processing (communication) based on a reception of the corresponding packets. Therefore, a pass 210 confirming that both of the two targets 200A and 200B receive the corresponding packets from the master 100 is provided between the two targets 200A and 200B and a parallel interface (IF) 220 is provided therebetween. If it is confirmed that both of the two packets 200A and 200B receive the corresponding packets from the master 100 by the pass 210, the data processing is performed between the two targets 200A and 200B through the parallel IF 220.

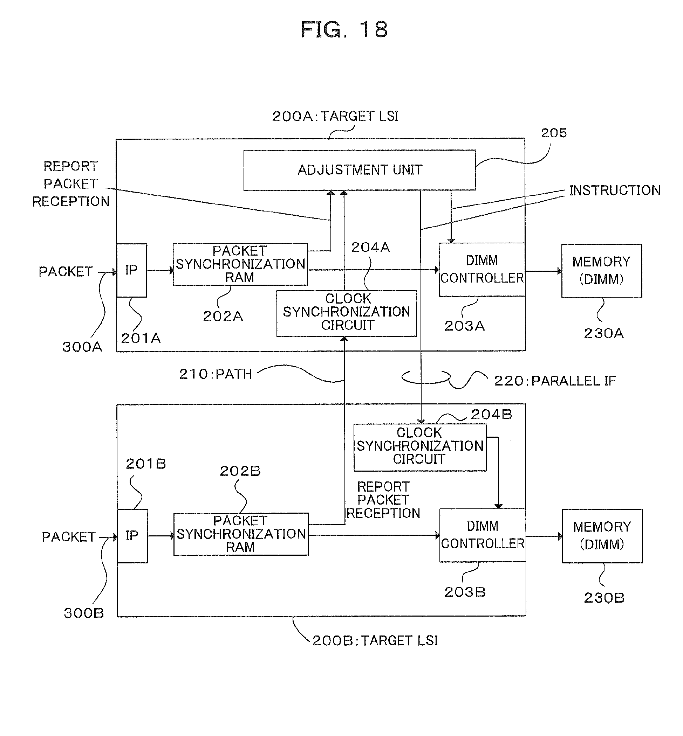

A detailed configuration example of the targets 200A and 200B operable as described above will be described with reference to FIG. 18. As illustrated in FIG. 18, the targets 200A and 200B each include double inline memory modules (DIMMs) 230A and 230B and include DIMM controllers 203A and 203B that control an access to the DIMMs 203A and 203B. Further, the targets 200A and 200B each include the transmitting and receiving units 201A and 201B, packet synchronization random access memories (RAMs) 202A and 202B, and clock synchronization circuits 204A and 204B. Further, the target 200A has an adjustment unit 205. In this case, the packets transmitted from the master 100 to each of the targets 200A and 200B include, for example, data, and the like that are written in each DIMM 230A and 230B. The adjustment unit 205 is included only in one place (herein, target 200A) to control all of the plurality (herein, two) of targets 200A and 200B.

In the target 200A, when the packets are received by the transmitting and receiving unit 201A and are stored in the packet synchronization RAM 202A, the fact that the transmitting and receiving unit 201A receives the packets is reported to the adjustment unit 205 from the packet synchronization RAM 202A.

Further, in the target 200B, when the packets are received by the transmitting and receiving unit 201B and are stored in the packet synchronization RAM 202B, the fact that the transmitting and receiving unit 201B receives the packets is transmitted to the target 200A from the packet synchronization RAM 202B through the pass 210. Further, in the target 200A, the report from the target 200B is notified to the adjustment unit 205 after the clock synchronization processing is performed by the clock synchronization circuit 204A.

When the adjustment unit 205 is reported from both of the packet synchronization RAM 202A and the packet synchronization RAM 202B about the fact that the transmitting and receiving unit 201A and the transmitting and receiving unit 201B receives the packets simultaneously transmitted from the master 100, the adjustment unit 205 transmits an instruction to write the same packets in the DIMMs 230A and 230B to the DIMM controllers 203A and 203B. That is, the same instruction is directly notified to the DIMM controller 203A from the adjustment unit 205, but is transmitted to the target 200B from the adjustment unit 205 through the parallel IF 220. Then, in the target 200B, the instruction from the target 200A is notified to the DIMM controller 203B after the clock synchronization processing is performed by the clock synchronization circuit 204B. The DIMM controllers 203A and 203B notified with the same instruction write the packets stored in the packet synchronization RAMs 202A and 202B in the DIMMs 230A and 230B.

In the configuration illustrated in FIGS. 17 and 18, in order to simultaneously or almost simultaneously write the packets from the master 100 in the DIMMs 230A and 230B, there is a need to perform a confirmation operation on whether the packets from the master 100 arrive at all the targets 200A and 200B before the writing instruction is performed. The confirmation operation is performed through the pass 210 whenever the master 100 transmits the packets and requires 10 ns or more, and thus hinders the high-speed processing between the targets 200A and 200B.

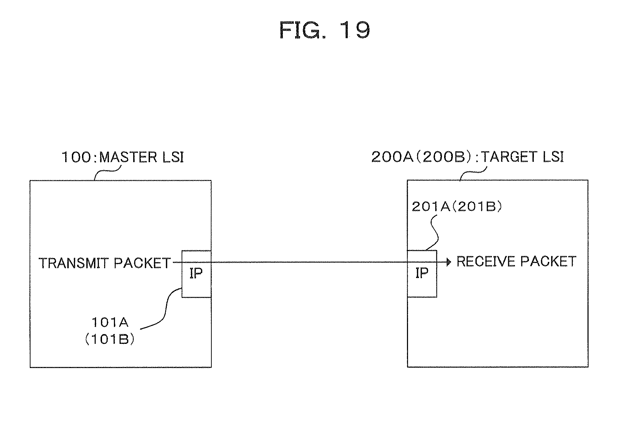

In order to realize the high-speed processing by removing the confirmation operation, it may be considered that the master 100 performs the transmission control of packets so that the packets from the master 100 simultaneously or almost simultaneously arrive at each of the targets 200A and 200B. In this case, as illustrated in FIG. 19, the time (one-way latency) until the master 100 transmits the packets and then, each of the targets 200A and 200B receives the same packets is measured in advance and the master 100 performs the transmission control of packets based on the one-way latency measured every target. Note that, FIG. 19 is a diagram for describing the one-way latency from the master 100 to each of the targets 200A and 200B.

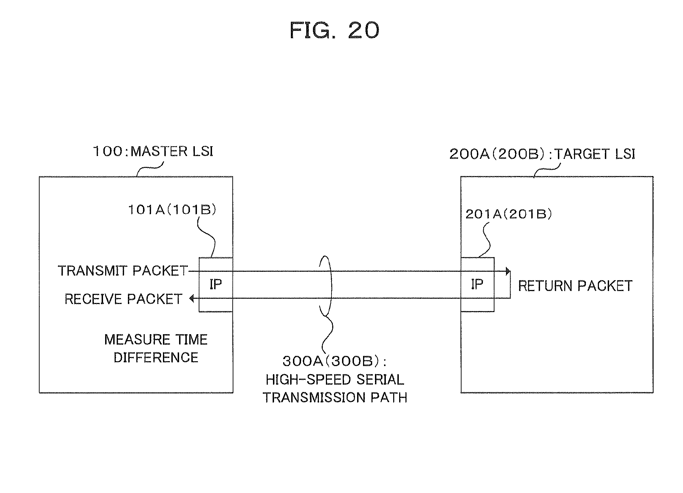

As a method of measuring the one-way latency, as illustrated in FIG. 20, a method of allowing the master 100 to acquire a reciprocal latency and measuring half of the acquired reciprocal latency as the one-way latency may be considered. In this case, the master 100 has, for example, a watch and transmits specific packets to each of the targets 200A and 200B and receives the corresponding packets returning from each of the targets 200A and 200B. Then, a time difference between the transmission time of the corresponding packet obtained by the watch and the reception time of the corresponding packet is the reciprocal latency and half of the same time difference is measured as the one-way latency. Note that, FIG. 20 is a diagram for describing the reciprocal latency between the master 100 and each of the targets 200A and 200B.

However, for the following reason, the accurate one-way latency cannot be obtained by simply making the reciprocal latency (time difference) half. When using the high-speed serial transmission as communication between the master 100 and each of the targets 200A and 200B, there is a considerable deviation in the time (latency) when the packets pass through the transmitting and receiving units 101A and 101B of the master 100 or the transmitting and receiving units 201A and 201B of the targets 200A and 200B. Therefore, even when the reciprocal latency is made to be merely a half, the accurate one-way latency cannot be obtained.

Here, the deviation will be described with reference to FIGS. 21A and 21B. The transmitting and receiving units 101A, 101B, 201A, and 201B each include a P/S converting unit (transmitting unit, transmitting IP) illustrated in FIG. 21A and an S/P converting unit (receiving unit, receiving IP) illustrated in FIG. 21B.

The transmitting IP illustrated in FIG. 21A is included between the synchronization RAM in which the data from the internal logic are stored and the high-speed serial transmission paths 300A and 300B and includes a physical coding sublayer (PCS) and a physical medium attachment (PMA). The PCS of the transmitting IP is a unit that encodes data and the PMA of the transmitting IP includes a serializer that serializes data so as to be output to the high-speed serial transmission paths 300A and 300B.

Meanwhile, the receiving IP illustrated in FIG. 21B is provided between the high-speed serial transmission paths 300A and 300B and the synchronization RAM inputting data to the internal logic and includes the PMA and the PCS. The PMA of the receiving IP includes a de-serializer that de-serializes data from the high-speed serial transmission paths 300A and 300B and the PCS of the receiving IP is a unit that decodes data from the PMA.

In the example illustrated in FIGS. 21A and 21B, the internal logic is operable at a clock of 500 MHz, the PCS is operable at a clock of 156.25 MHz, and the high-speed serial transmission paths 300A and 300B are operable at a clock of 10 GHz. The synchronization RAM performs the transfer between the clock of the internal logic and the clock of the PCS and the PMA performs the switching between the clock of the high-speed serial transmission paths 300A and 300B and the clock of the PCS.

In the transmitting IP illustrated in FIG. 21A, the data input from the internal logic is transmitted to the high-speed serial transmission paths 300A and 300B by way of each block within the synchronization RAM and the PCS/PMA. As such, when data are transmitted and received between the blocks, the latency (passing time) having the following deviation occurs. Even in the receiving IP illustrated in FIG. 21B, like the transmitting IP, the latency (passing time) having the deviation occurs.

Hereinafter, the example of the latency occurring in the transmitting IP and the receiving IP will be described. Note that τ is one control period.

The transmitting side latency (PCS + PMA) is 4 to 6 τ [1 τ at 156.25 MHz is 6.4 ns].

The latency of the synchronization RAM at the transmitting side is 3 to 4 τ [1 τ at 156.25 MHz is 6.4 ns].

The receiving side latency (PCS + PMA) is 6 to 8 τ [1 τ at 156.25 MHz is 6.4 ns].

The latency of the synchronization RAM at the receiving side is 3 to 4 τ [1 τ at 156.25 MHz is 6.4 ns].

Therefore, the latency of the transmitting IP (including the synchronization RAM) is 7 to 10 τ, that is, 44.8 to 64.0 ns and the latency of the receiving IP (including the synchronization RAM) is 9 to 12 τ, that is, 57.6 to 76.8 ns. Therefore, the one-way latency that does not include the transmission delay from the transmitting IP to the receiving IP becomes 16 to 22 τ, that is, 102.4 to 140.8 ns and the deviation width (maximum difference) of the latency occurring in the transmitting IP and the receiving IP becomes 6 τ = 38.4 ns. Here, the maximum difference becomes 38.4 ns at the time of converting into the clock (156.25 MHz) for IP, but when the operating clock for the internal logic is, for example, 500 MHz, the maximum difference (38.4 ns) becomes about 19 τ at the time of converting into 500 MHz (one control period of 2 ns).

Since the deviations in the latency as described above exist in the transmitting IP and the receiving IP, even when the reciprocal latency is made to be merely a half, the accurate one-way latency cannot be obtained.

As the method of directly measuring the accurate one-way latency without using the reciprocal latency, the following method can be considered. That is, all of the master 100 and the plurality of targets 200A and 200B include a previously synchronized watch or a counter and the master 100 transmits the specific packets to each of the targets 200A and 200B. Then, the difference between the transmission time of the corresponding packets obtained by the master 100 or the count value at the time of transmitting the corresponding packets by the master 100 and the reception time of the corresponding packets obtained by each of the targets 200A and 200B or the count value at the time of receiving the corresponding packets by each of the targets 200A and 200B can be measured as the one-way latency.

As described above, in order to directly measure the accurate one-way latency, there is a need to synchronize a watch or a counter that is included in all of the master 100 and the plurality of targets 200A and 200B. In order to synchronize the watch or the counter, the packets are transmitted and received between the master 100 and each of the targets 200A and 200B through the high-speed serial transmission paths 300A and 300B. However, the considerable deviations as described above exist in the latency of the transmitting IP or the receiving IP forming the transmitting and receiving units 101A, 101B, 201A, and 201B, such that each of the targets 200A and 200B cannot obtain the accurate receiving time or the count value at the time of the receiving. Therefore, the synchronous error occurs since the one-way latency (transmitting delay difference) cannot be measured with high accuracy.
[Patent Literature 1] Japanese Laid-Open Patent Publication No. 2004-222088
[Patent Literature 2] Japanese Laid-Open Patent Publication No. 09-312633
[Patent Literature 3] Japanese Patent No. 3031292

### SUMMARY

One aspect of the present invention is to measure a transmitting delay difference from a first processing unit till a plurality of second processing units with high accuracy.

An aspect of the embodiments provides an information processing apparatus, including: a first processing unit; and a plurality of second processing units each being operable according to a signal from the first processing unit, wherein each of the plurality of second processing units includes: a counter that counts a count value in synchronization with such a counter included in each remaining second processing unit; a register that holds the count value of the counter; and a control unit that stores the count value, which is counted by the counter when receiving a measurement instruction from the first processing unit, as a receipt-timing count value into the register and notifies the first processing unit of the receipt-timing count value held in the register, and the first processing unit calculates one or more differences between a plurality of the receipt-timing count values notified from the plurality of second processing units as a transmitting delay difference from the first processing unit to each of the plurality of second processing units.

Another aspect of the embodiments provides a method of measuring, in an information processing apparatus including a first processing unit and a plurality of second processing units each being operable according to a signal from the first processing unit, a transmitting delay difference from the first processing unit to each of the plurality of second processing units, the method including: at each of the plurality of second processing units, counting a count value by a counter included in each of the plurality of second processing units in synchronization with such a counter included in each remaining second processing unit, storing the count value, which is counted by the counter when receiving a measurement instruction from the first processing unit, as a receipt-timing count value into a register, and notifying the first processing unit of the receipt-timing count value held by the register, and at the first processing unit, calculating one or more differences between a plurality of the receipt-timing count values notified from the plurality of second processing units as the transmitting delay difference from the first processing unit to each of the plurality of second processing units.

Yet another aspect of the embodiments provides a program that causes an information processing apparatus, including a first processing unit and a plurality of second processing units each being operable according to a signal from the first processing unit, to execute a process of measuring a transmitting delay difference from the first processing unit to each of the plurality of second processing units, the process including: at each of the plurality of second processing units, counting a count value by a counter included in each of the plurality of second processing units in synchronization with such a counter included in each remaining second processing unit; storing the count value, which is counted by the counter when receiving a measurement instruction from the first processing unit, as a receipt-timing count value into a register; and notifying the first processing unit of the receipt-timing count value held by the register, and at the first processing unit, calculating one or more differences between a plurality of the receipt-timing count values notified from the plurality of second processing units as the transmitting delay difference from the first processing unit to each of the plurality of second processing units.

According to the embodiment of the present invention, the transmitting delay difference from the first processing unit to the plurality of second processing units is measured with high accuracy.

The object and advantages of the invention will be realized and attained by means of the elements and combinations particularly pointed out in the claims.

It is to be understood that both the foregoing general description and the following detailed description are exemplary and explanatory and are not restrictive of the invention.

### BRIEF DESCRIPTION OF DRAWINGS

FIG. 1 is a block diagram illustrating a basic configuration of an information processing apparatus according to one embodiment of the present invention;
FIG. 2 is a diagram for describing a measurement order of a transmitting delay difference (one-way latency difference) due to the information processing apparatus illustrated in FIG. 1;
FIG. 3 is a flowchart for describing the measurement order of the transmitting delay difference (one-way latency difference) due to the information processing apparatus illustrated in FIG. 1;
FIG. 4 is a flowchart for describing a basic synchronous setting order of a counter in a second processing unit of the information processing apparatus illustrated in FIG. 1;
FIG. 5 is a block diagram illustrating a detailed configuration example of a system to which the information processing apparatus illustrated in FIG. 1 is applied;
FIG. 6 is a block diagram illustrating a detailed configuration of a control unit in the second processing unit of the information processing apparatus illustrated in FIG. 1;
FIG. 7 is a block diagram illustrating a detailed configuration of main components of two second processing units to which the configuration illustrated in FIG. 6 is applied;
FIG. 8 is a flowchart for describing a detailed synchronous setting order and synchronous confirmation order of a counter in the second processing unit based on the configuration illustrated in FIG. 7;
FIG. 9 is a time chart for describing the detailed synchronous setting order of the counter in the second processing unit based on the configuration illustrated in FIG. 7;
FIG. 10 is a time chart for describing the detailed synchronous confirmation order of the counter in the second processing unit based on the configuration illustrated in FIG. 7;
FIG. 11 is a block diagram illustrating the configuration of main components of each second processing unit when the information processing unit includes at least three second processing units;
FIG. 12 is a time chart for describing the detailed synchronous setting order (first measurement order) of the counter in the second processing unit based on the configuration illustrated in FIG. 11;
FIG. 13 is a time chart for describing the detailed synchronous setting order (second measurement order) of the counter in the second processing unit based on the configuration illustrated in FIG. 11;
FIG. 14 is a time chart for describing the detailed synchronous setting order of the counter in the second processing unit based on the configuration illustrated in FIG. 11;
FIG. 15 is a block diagram illustrating a detailed entire configuration of the information processing apparatus to which the configuration illustrated in FIG. 7 is applied;
FIG. 16 is a time chart for describing the measurement order of the transmitting delay difference (one-way latency) from the first processing unit to each second processing unit based on the configuration illustrated in FIG. 15;
FIG. 17 is a block diagram illustrating a configuration example of the information processing apparatus including a master LSI and a plurality of target LSIs;
FIG. 18 is a block diagram illustrating a detailed configuration example of the plurality of target LSIs illustrated in FIG. 17;
FIG. 19 is a diagram illustrating one-way latency from the master LSI to each target LSI;
FIG. 20 is a diagram illustrating reciprocal latency between the master LSI and each target LSI; and
FIG. 21A is a block diagram illustrating a configuration example of a parallel/serial converting unit and FIG. 21B is a block diagram illustrating a configuration example of a serial/parallel converting unit.

### DESCRIPTION OF THE PREFERRED EMBODIMENTS

Hereinafter, embodiments will be described with reference to the accompanying drawings.

### [1] Basic configuration and basic operation of information processing apparatus according to the embodiment

### [1-1] Basic configuration of information processing apparatus according to the embodiment

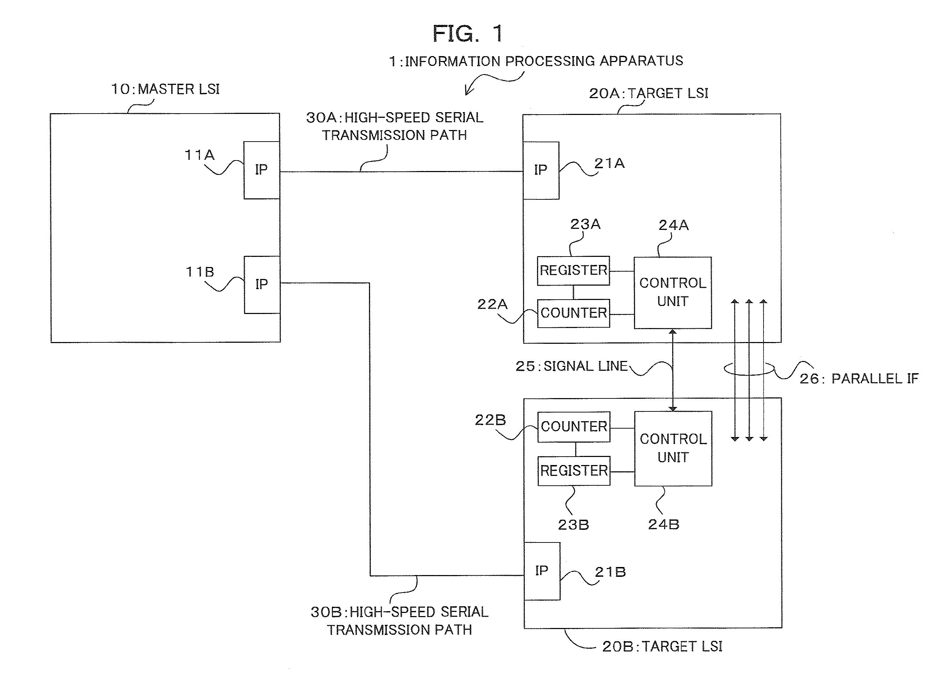

A basic configuration of an information processing apparatus 1 according to one embodiment will be described with reference to FIG. 1. FIG. 1 is a block diagram illustrating a basic configuration of the information processing apparatus 1 according to one embodiment.

The information processing apparatus 1 illustrated in FIG. 1 includes a master LSI (first processing unit) 10 and two target LSIs (second processing units) 20A and 20B that are operable according to packets (signals) from the same master LSI 10. The master 10 and the two targets 20A and 20B are each connected to communicate with each other through high-speed serial transmission paths 30A and 30B. In the information processing apparatus 1, packets are transmitted from the master 10 to the two targets 20A and 20B through the high-speed serial transmission paths 30A and 30B and in the targets 20A and 20B, data processing (communication) is performed through a parallel IF 26 based on the reception of the corresponding packets.

The high-speed serial transmission path 30A connects a transmitting and receiving unit (IP) 11A of the master 10 with a transmitting and receiving unit (IP) 21A of the target 20A. Similarly, the high-speed serial transmission path 30B connects a transmitting and receiving unit (IP) 11B of the master 10 with a transmitting and receiving unit (IP) 21B of the target LSI 20B. The transmitting and receiving units 11A, 11B, 21A, and 21B each include the foregoing P/S converting unit (transmitting unit) and the S/P converting unit (receiving unit).

The target 20A includes a counter 22A, a register 23A, and a control unit 24A and similarly, the target 20B includes a counter 22B, a register 23B, and a control unit 24B.

The counters 22A and 22B are each controlled by the control units 24A and 24B and count the same count values (time) as other counters 22B and 22A in other targets 20B and 20A. That is, the count values by the counters 22A and 22B in the two targets 20A and 20B are synchronized with each other as described below.

The registers 23A and 23B are each controlled by the control units 24A and 24B to hold the count values of the counters 22A and 22B.

The control units 24A and 24B each store the count values, which are counted by the counters 22A and 22B when the transmitting and receiving units 21A and 21B receive the measurement instruction (specific packet) from the master 10, as a receipt-timing count value into the registers 23A and 23B. Further, the control units 24A and 24B each notify the master 10 of the receipt-timing count values held by the registers 23A and 23B through the transmitting and receiving units 21A and 21B and the high-speed serial transmission paths 30A and 30B.

Further, the control units 24A and 24B each control the counters 22A and 22B or the registers 23A and 23B followed by the measurement of the one-way latency difference (transmitting delay difference) by the master 10 at the time of starting the system, thereby performing the synchronous setting of the count values so that the counters 22A and 22B simultaneously count the same count values. Therefore, the control unit 24A of the target 20A and the control unit 24B of the target 20B are connected with each other by one dedicated transmitting and receiving signal line 25 to transmit and receive a specific signal (pulse signal) between the control units 24A and 24B. The signal line 25 is wired so as to connect between one terminal of the target LSI 20A and one terminal of the target LSI 20B at a shortest wiring length. The control units 24A and 24B are configured to transmit and receive information by transmitting and receiving the pulse signal using the signal line 25, without using the transmitting and receiving units 11A, 11B, 21A, and 21B including the P/S converting unit or the S/P converting unit having considerable deviations in latency.

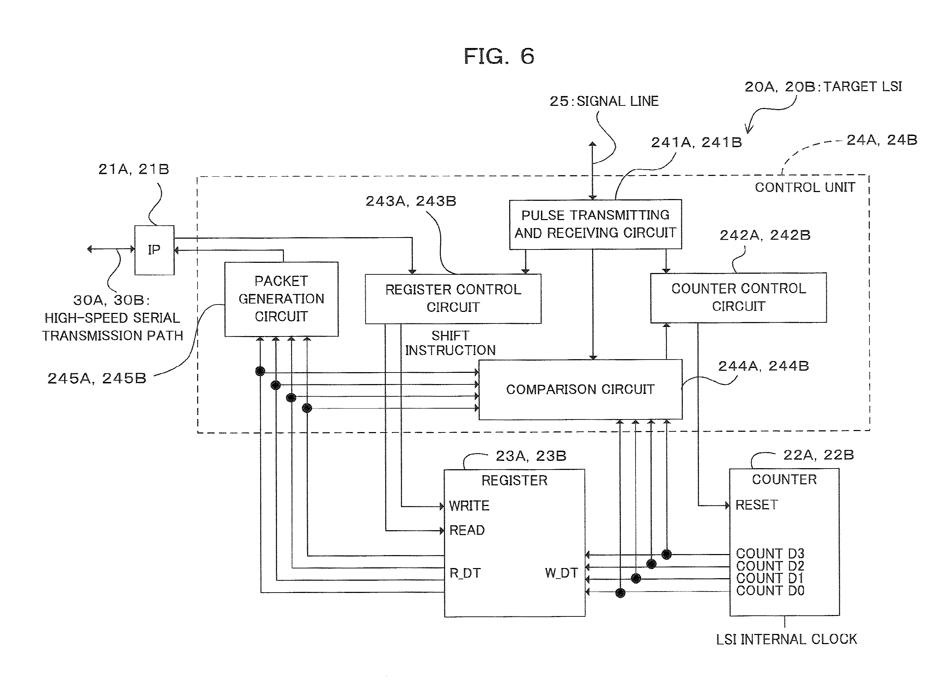

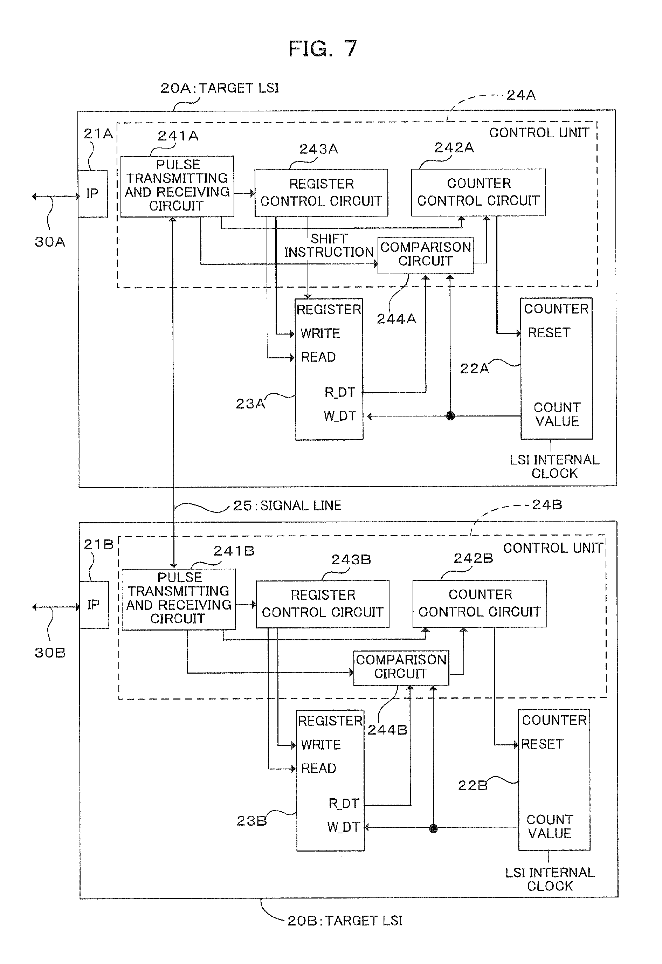

The control units 24A and 24B transmit and receive the pulse signals therebetween through the signal line 25 and control the counters 22A and 22B and the registers 23A and 23B according to the transmitting timing or the receiving timing of the pulse signal. Therefore, the control units 24A and 24B may perform the synchronous setting of the count values so as for the counters 22A and 22B to simultaneously count the same count values, without passing through the transmitting and receiving units 11A, 11B, 21A, and 21B including the P/S converting unit or the S/P converting unit having the considerable deviations in latency. As such, when the pulse signals are transmitted and received between the control units 24A and 24B through one signal line 25, the time required for the pulse signals to reach the control unit 24B from the control unit 24A is substantially the same as the time required for the pulse signals to reach the control unit 24A from the control unit 24B. Therefore, the reciprocal latency (time difference) between the control unit 24A and the control unit 24B is made to be merely a half, such that it is possible to obtain the accurate one-way latency. Note that, the detailed configuration of the control units 24A and 24B for setting the count values of the counters 22A and 22B to be the same value will be described below with reference to FIGS. 6 and 7.

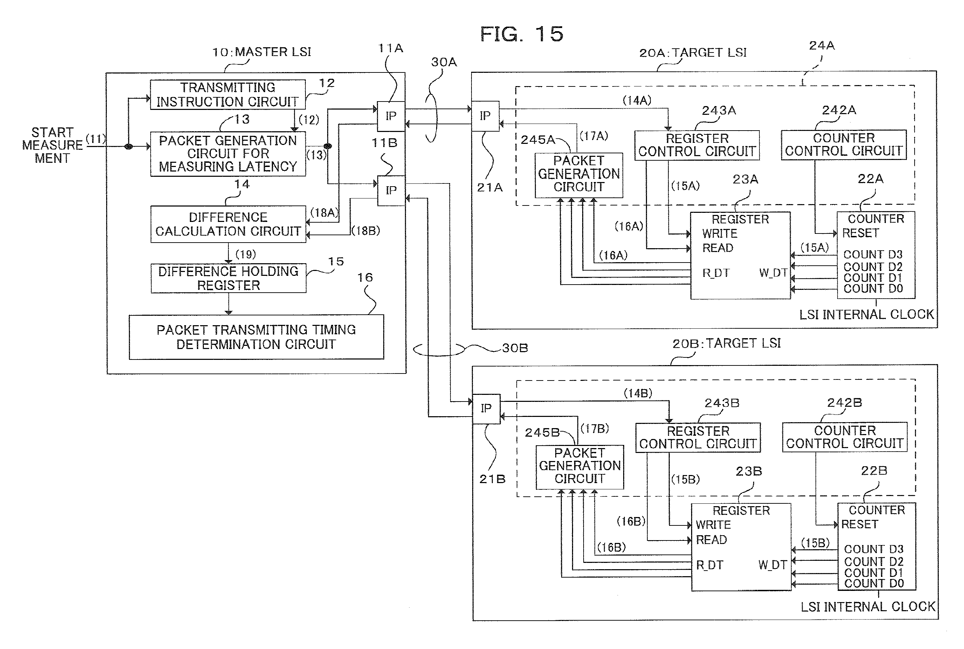

Meanwhile, the master 10 has a function (see reference numeral 13 of FIG. 15) of simultaneously issuing the measurement instruction (specific packet) to the plurality of targets 20A and 20B after the synchronous setting of the counters 22A and 22B is completed so as for the master 10 to measure the one-way latency difference (transmitting delay difference) at the time of starting the system. Further, the master 10 has a function (see reference numeral 14 of FIG. 15) of calculating the difference between the receipt-timing count values notified from each of the targets 20A and 20B through each of the high-speed serial transmission paths 30A and 30B as a difference in one-way latency from the master 10 to each of the targets 20A and 20B. Further, the master 10 has a function (see reference numeral 16 of FIG. 15) of determining the transmitting timing of the packets to the plurality of targets 20A and 20B, that is, the transmitting timing when the corresponding packets simultaneously or almost simultaneously reach the plurality of targets 20A and 20B based on the calculated one-way latency difference.

### [1-2] Basic operation of information processing apparatus according to the embodiment

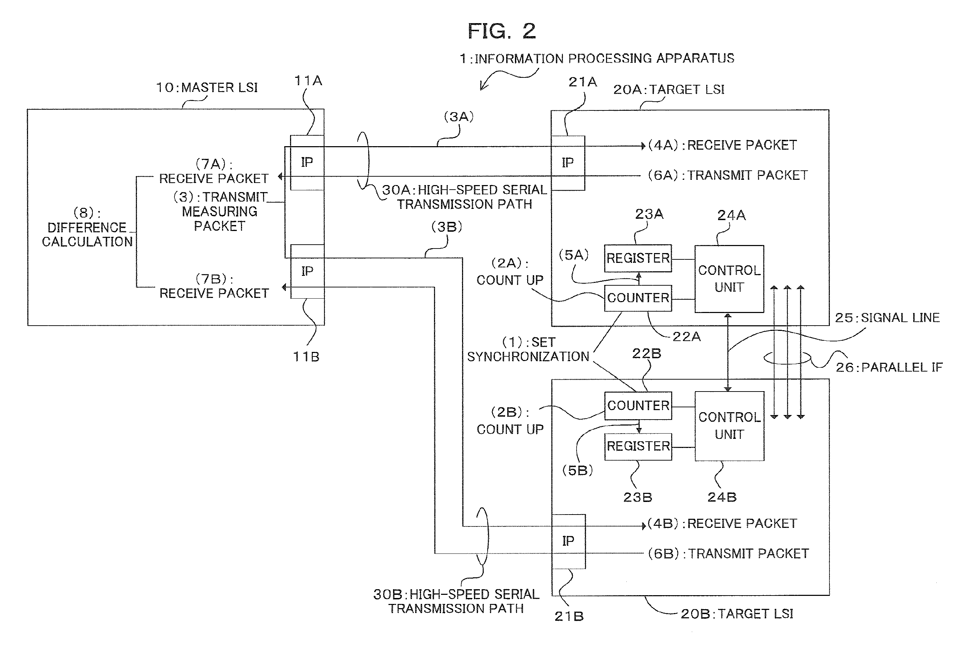

Next, the basic operation of the information processing apparatus 1 illustrated in FIG. 1 will be described with reference to FIGS. 2 to 4.

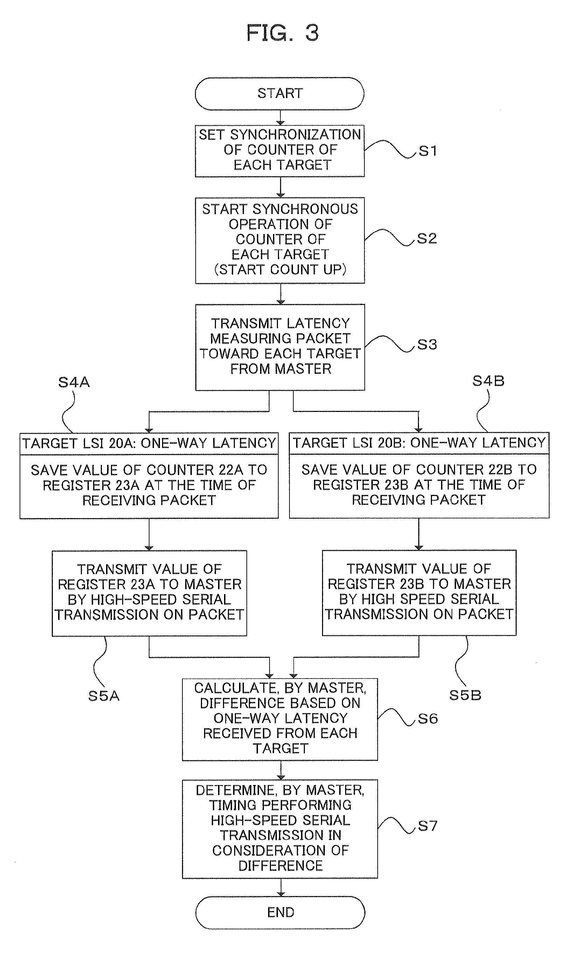

First, the measurement order of the transmitting delay difference (one-way latency difference) due to the information processing apparatus 1 will be described with reference to reference numerals (1) to (8) in FIG. 2 and the flowchart (steps S1 to S7) illustrated in FIG. 3.

At the time of starting the system including the information processing apparatus 1, the control units 24A and 24B perform (see reference numeral (1) of FIG. 2 and step S1 of FIG. 3) the synchronous setting of the count values so as for the counters 22A and 22B to simultaneously count the same count values (same time), such that the master 10 measures the one-way latency difference. The basic operation of the control units 24A and 24B performing the synchronous setting in step S1 will be described with reference to FIG. 3. By performing the synchronous setting, the synchronous count of the counters 22A and 22B starts (see reference numerals (2A) and (2B) of FIG. 2 and step S2 of FIG. 3).

The master 10 generates the packets for measuring latency by the high-speed serial transmission, that is, the specific packet instructing the measurement so as to measure the difference in one-way latency after the synchronous setting of the counters 22A and 22B is completed. Further, the master 10 simultaneously issues and transmits the generated packet for measuring latency to each of the targets 20A and 20B through the transmitting and receiving units 11A and 11B and the high-speed serial transmission paths 30A and 30B (see reference numerals (3), (3A), and (3B) of FIG. 2 and step S3 of FIG. 3).

In the target 20A, the count value, which is counted by the counter 22A when the counter 22A receives the packet for measuring the corresponding latency from the master 10, is written, saved and held in the register 23A by the control unit 24A (see reference numerals 4A and 5A of FIG. 2 and step S4A of FIG. 3). Similarly, in the target 20B, the count value, which is counted by the counter 22B when the counter 22B receives the packet for measuring the corresponding latency from the master 10, is written, saved and held in the register 23B by the control unit 24B (see reference numerals (4B) and (5B) of FIG. 2 and step S4B of FIG. 3).

The count value of the counter 22A held in the register 23A is notified to the master 10 through the transmitting and receiving unit 21A and the high-speed serial transmission path 30A by the control unit 24A (see reference numeral (6A) of FIG. 2 and step S5A of FIG. 3). Similarly, the count value of the counter 22B held in the register 23B is notified to the master 10 through the transmitting and receiving unit 21B and the high-speed serial transmission path 30B by the control unit 24B (see reference numeral (6B) of FIG. 2 and step S5B of FIG. 3).

In the master 10, when the count value from the target 20A and the count value from the target 20B are received through the transmitting and receiving units 11A and 11B (see reference numerals (7A) and (7B) of FIG. 2), the difference between the count value from the target 20A and the count value from the target 20B is calculated (see reference numeral (8) of FIG. 2 and step S6 of FIG. 3).

Herein, the master 10 does not include the counters, and the like that are synchronized with the count values (time) of the counters 22A and 22B in the targets 20A and 20B. Therefore, in the master 10, the count values from the targets 20A and 20B each are the one-way latency (transmitting delay) in appearance from the master 10 to each of the targets 20A and 20B. Meanwhile, the packets for measuring latency are simultaneously issued to the targets 20A and 20B from the master 10 and the counters 22A and 22B of the targets 20A and 20B are synchronized with each other. Therefore, the difference calculated in step S6 becomes the absolute difference in one-way latency (transmitting delay difference) between the targets 20A and 20B.

Further, the master 10 determines (see step S7 of FIG. 3) the transmitting timing of the packets to each of the targets 20A and 20B, that is, the proper transmitting timing when the corresponding packets simultaneously or almost simultaneously reach each of the targets 20A and 20B based on the difference in one-way latency calculated in step S6. Next, the master 10 transmits the packets to each of the targets 20A and 20B through the transmitting and receiving units 11A and 11B and the high-speed serial transmission paths 30A and 30B at the transmitting timing determined in step S7.

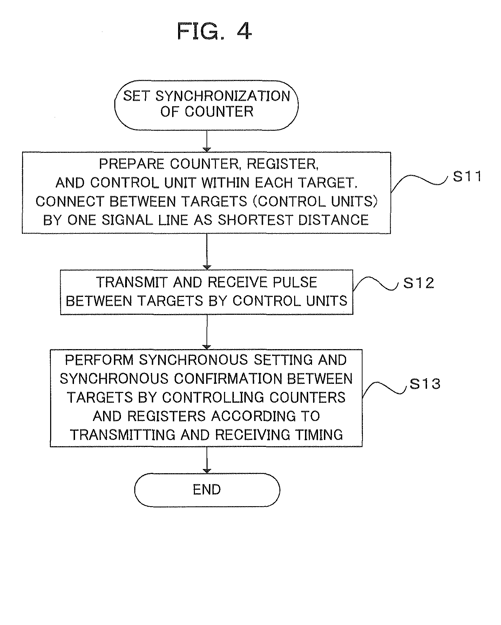

Next, the basic synchronous setting order of the counters 22A and 22B in the targets 20A and 20B of the information processing apparatus 1 will be described with reference to the flowcharts (step S11 to S13) illustrated in FIG. 4.

Each of the target LSIs 20A and 20B in the information processing apparatus 1 to which the method for measuring one-way latency difference according to the embodiment is applied previously includes the counters 22A and 22B, the registers 23A and 23B, and the control units 24A and 24B that are described above. Further, as described above, the control unit 24A of the target 20A and the control unit 24B of the target 20B are previously connected with each other at the shortest wiring length by one signal line 25 transmitting and receiving the pulse signals between the control units 24A and 24B (step S11).

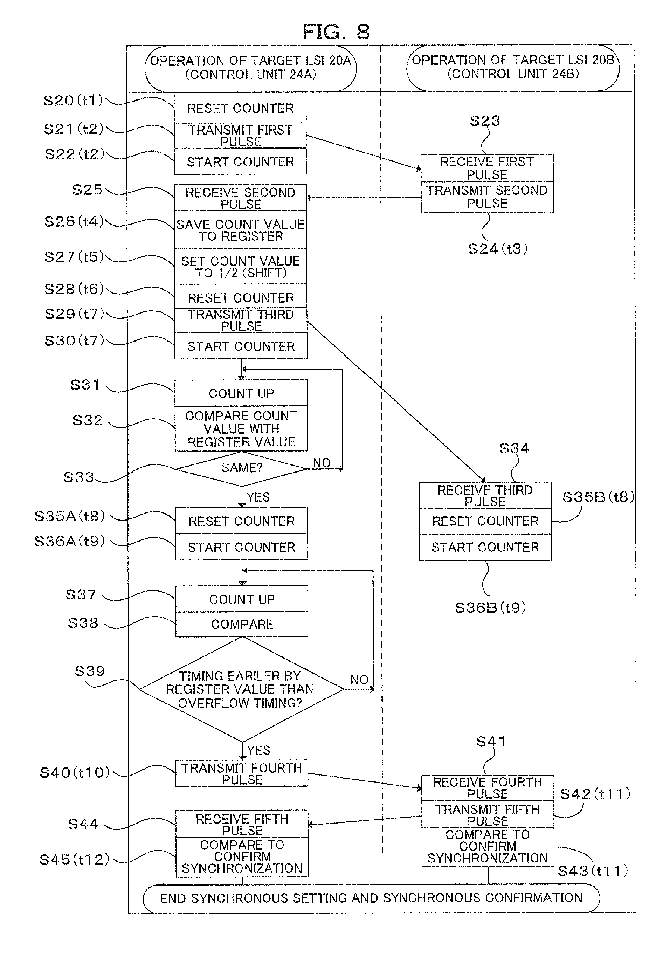

Further, the pulse signals are mutually transmitted and received between the control units 24A and 24B through the signal line 25 (step S12). The counters 22A and 22B and the registers 23A and 23B are controlled by the control units 24A and 24B according to the transmitting timing or the receiving timing of the pulse signals. Therefore, the synchronous setting and the synchronous confirmation of the count values are performed so as for the counters 22A and 22B to simultaneously count the same count values, without using the transmitting and receiving units 11A, 11B, 21A, and 21B including the P/S converting unit or the S/P converting unit having the considerable deviations in latency (step S13). Note that, in steps S12 and S13, the detailed operation of the control units 24A and 24B performing the synchronous setting and the synchronous confirmation will be described below with reference to FIGS. 8 to 10.

As such, referring to FIGS. 1 to 4, according to the foregoing information processing apparatus 1, the one-way latency in appearance between the master 10 and each of the targets 20A and 20B is accurately measured by using the counters 22A and 22B that are provided in each of the targets 20A and 20B and count the same count values. The difference in one-way latency in appearance from the master 10 to each of the targets 20A and 20B, which is measured as above, is calculated as the absolute difference in one-way latency between the targets 20A and 20B.

Therefore, the master 10 may appropriately determine the timing when the packets are transmitted to each of the targets 20A and 20B by the high-speed serial transmission without generating unnecessary standby time, thereby implementing the high-speed operation of the system.

The apparatus illustrated in FIG. 17 or 18 requires time of, for example, 8 τ so as for the adjustment unit 205 of the target 200A to confirm that the target 200B receives the packets from the master 100 using the pass 210. On the other hand, in the information processing apparatus 1 according to the embodiment, since the packets from the master 10 may simultaneously or almost simultaneously reach each of the targets 20A and 20B, it can be recognized that the same packet reaches even the target 20B at the time when the packet reaches the target 20A. Therefore, similar to the apparatus illustrated in FIG. 17 or 18, in the information processing apparatus 1 according to the embodiment, there is no need to perform the confirmation of packet reception in another target 200B, such that the time required to confirm the packet reception may be saved. For example, when the packet transmission from the master 10 to each of the targets 20A and 20B is performed 10,000 times, the time of 80,000 τ can be saved in the information processing apparatus 1 according to the embodiment. Therefore, when the short packet is repeatedly transmitted, the time saving effect is greatly increased. For example, when the transmission processing time of one packet including the reception confirmation is 24 τ, if the reception confirmation is omitted, the transmission processing time is shortened by 8 τ so as to be 16 τ and the processing time required to repeatedly transmit the packet is shortened by about 33% to be improved.

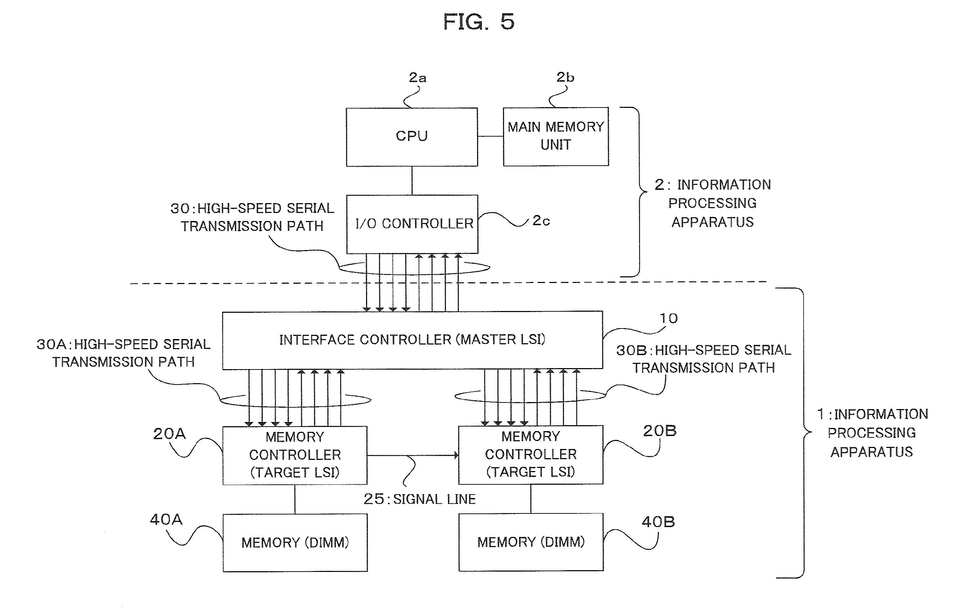

Here, the detailed configuration example of the system to which the information processing apparatus 1 is applied will be described with reference to FIG. 5. FIG. 5 is a block diagram illustrating the detailed configuration example of the system. The system illustrated in FIG. 5 is configured to include an information processing apparatus (I/O) 1 and an information processing apparatus (host) 2 according to the embodiment. The information processing apparatus (host) 2 includes a CPU 2a, a main memory device 2b, and an I/O controller 2c and is connected with the information processing apparatus 1 through the I/O controller 2c and a high-speed serial transmission path 30. Further, the master LSI 10 of the information processing apparatus 1 serves as an interface controller and is connected with the I/O controller 2c of the information processing apparatus 2 through the high-speed serial transmission path 30. Further, the target LSIs 20A and 20B of the information processing apparatus 1 each serve as a memory controller that controls an access to DIMMs 40A and 40B. Further, the master LSI 10 transmits the packets for performing an access to the DIMMs 40A and 40B to the target LSIs 20A and 20B according to a request from the CPU 2a of the information processing apparatus 2. In this system, the measurement of the difference in one-way latency according to the embodiment as described above is performed within the starting sequence of the system and the measured result (difference in one-way latency) is used for the adjustment of the packet transmitting timing at the time of the general operation by the master LSI 10.

### [2] Detailed configuration and operation of information processing apparatus according to the embodiment

### [2-1] Detailed configuration of information processing apparatus according to the embodiment

Hereinafter, the detailed configuration of the control units 24A and 24B will be described with reference to FIGS. 6 and 7. FIG. 6 is a block diagram illustrating a detailed configuration of the control units 24A and 24B in the target LSIs (second processing units) 20A and 20B and FIG. 7 is a block diagram illustrating a detailed configuration of main components in two target LSIs 20A and 20B to which the configuration illustrated in FIG. 6 is applied. Note that, FIG. 7 does not illustrate packet generation circuits 245A and 245B.

As illustrated in FIG. 6, the target 20A includes the transmitting and receiving unit 21A, the counter 22A, the register 23A, and the control unit 24A that are described above. The counter 22A outputs count values (counts D0 to D3) performing the count operation according to an internal clock of the LSI 20A to the register 23A. The register 23A holds the count value of the counter 22A when the count value of the counter 22A is input to a data writing terminal W_DT and an enable signal is input to a write terminal and outputs a held count value from a data reading terminal R_DT when the enable signal is input to a read terminal.

Similarly, the target 20B includes the transmitting and receiving unit 21B, the counter 22B, the register 23B, and the control unit 24B that are described above. The counter 22B outputs count values (counts D0 to D3) performing the count operation according to an internal clock of the LSI 20B to the register 23B. The register 23B holds the count value of the counter 22B when the count value of the counter 22B is input to the data writing terminal W_DT and an enable signal is input to a write terminal and outputs a held count value from a data reading terminal R_DT when the enable signal is input to a read terminal.

In the embodiment, the target 20A has a function corresponding to the adjustment unit 205 illustrated in FIG. 18 and the control unit 24A of the target 20A mainly performs the synchronous setting and the synchronous confirmation of the counters 22A and 22B.

The control unit (one control unit) 24A of the target 20A includes a pulse transmitting and receiving circuit 241A, a counter control circuit 242A, a register control circuit 243A, a comparison circuit 244A, and a packet generation circuit 245A. Similarly, the control unit (another control unit) 24B of the target 20B includes a pulse transmitting and receiving circuit 241B, a counter control circuit 242B, a register control circuit 243B, a comparison circuit 244B, and a packet generation circuit 245B.

As illustrated in FIG. 7, the pulse transmitting and receiving circuits 241A and 241B are connected so as to communicate with each other through one signal line 25 to generate the pulse signal to be described below and perform the transmission/reception of the generated pulse signal.

As described below, the counter control circuits 242A and 242B each perform the control of the start of the reset and count of the counters 22A and 22B according to the transmitting and receiving timing of the pulse signals by the pulse transmitting and receiving circuits 241A and 241B. The counter control circuits 242A and 242B each input the enable signals to RESET terminals of the counters 22A and 22B to perform the start of the reset and count of the counters 22A and 22B.

The register control circuits 243A and 243B each input the enable signals to the write terminal/read terminals of the registers 23A and 23B to control the writing and holding of the count values in the registers 23A and 23B and the reading of the held count values from the registers 23A and 23B.

The register control circuits 243A and 243B each store the count values by the counters 22A and 22B at the time of receiving the corresponding packets into the registers 23A and 23B, at the timing when the transmitting and receiving units 21A and 21B receive the packets for measuring latency from the master 10. Further, the register control circuits 243A and 243B each read the count values held in the registers 23A and 23B according to the reception of the corresponding packets and transmit the read count values to the packet generation circuits 245A and 245B.

Further, as described below, the register control circuits 243A and 243B each control the writing and holding of the count values in the registers 23A and 23B and the reading of the held count values from the registers 23A and 23B according to the transmitting and receiving timing of the pulse signals by the pulse transmitting and receiving circuits 241A and 241B.

Further, the register control circuit 243A of the target 20A has a function of outputting a shift instruction to the register 23A so that the count value held in the register 23A is a half value at the time of receiving a second pulse signal to be described below. When receiving the shift instruction from the register control circuit 243A, the register 23A shifts (shift by 1 bit in a right direction) the count value held in the register 23A by 1 bit in a least significant bit direction to set the corresponding count value to be a half value, such that the register 23A has a function of holding the corresponding half value.

As described below, the comparison circuits 244A and 244B each compare the count values by the counters 22A and 22B with the count values held in the registers 23A and 23B.

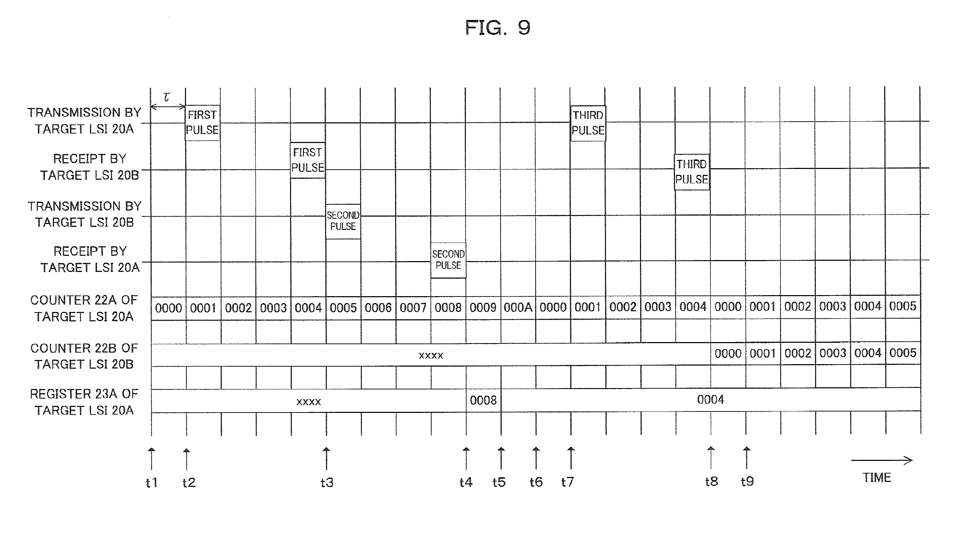

The comparison circuit 244A of the target 20A compares the count value by the counter 22A with the half value held in the register 23A so as to detect the timing when the counts of the counters 22A and 22B simultaneously start (see steps S32 to S33 of FIG. 8 and timings t7 to t8 of FIG. 9).

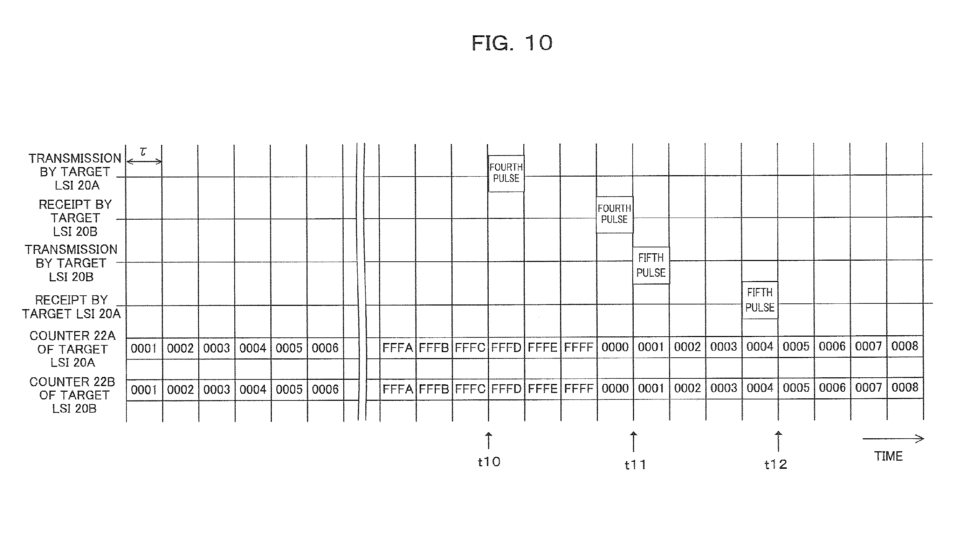

Further, the comparison circuit 244A of the target 20A has a comparison function for detecting the timing when the synchronous confirmation of the counters 22A and 22B start, that is, the timing earlier by the half value than the timing when the counter 22A overflows. The corresponding comparison function compares the count value by the counter 22A with a value obtained by subtracting the half value from the overflow value of the counter 22A (see steps S38 and S39 of FIG. 8 and timing t10 of FIG. 10). The control unit 24A includes a function of subtracting the half value in the register 23A from the overflow value of the counter 22A and the register (not illustrated) holding the subtracted result. Further, the comparison circuit 244A of the target 20A compares the count value by the counter 22A with the half value held in the register 23A so as to perform the synchronous confirmation at the timing when the counter 22A overflows (see step S45 of FIG. 8 and timing t12 of FIG. 10).

Meanwhile, the comparison circuit 244B of the target 20B compares the count value by the counter 22B with 0 held in the register 23A so as to perform the synchronous confirmation at the timing when the counter 22B overflows (see step S43 of FIG. 8 and timing t11 of FIG. 10). The register control circuit 243B of the target 20B has a function of setting 0 (all-zero bit pattern) in the register 23A prior to performing the synchronous confirmation.

When receiving the count values by the counters 22A and 22B when receiving the packets for measuring latency from the registers 23A and 23B, the packet generation circuits 245A and 245B generate the packets including the corresponding count values. The packet generation circuits 245A and 245B each transmit the generated packets to the master 10 through the transmitting and receiving units 21A and 21B and the high-speed serial transmission paths 30A and 30B. Further, as described below, the packet generation circuits 245A and 245B each also include a function of generating the packets including the comparison results by the comparison circuits 244A and 244B and transmitting the generated packets to the master 10 through the transmitting and receiving units 21A and 21B and the high-speed serial transmission paths 30A and 30B.

### [2-2] Detailed function and operation of information processing apparatus according to the embodiment

Next, the detailed synchronous setting order and synchronous confirmation order of the counters 22A and 22B in the target LSIs 20A and 20B having the control units 24A and 24B configured as described above, that is, the detailed function of the control units 24A and 24B will be described with reference to FIGS. 8 to 10. FIG. 8 is a flowchart (steps S20 to S45) for describing the synchronous setting order and the synchronous confirmation order, FIG. 9 is a timing chart (timings t1 to t9) for describing the synchronous setting order, and FIG. 10 is a timing chart (timings t10 to t12) for describing the synchronous confirmation order. Note that, a basic unit in a time direction in FIGS. 9 and 10 corresponds to one control period τ according to the internal clock of the LSIs 20A and 20B.

The pulse transmitting and receiving circuit 241A of the control unit 24A and the pulse transmitting and receiving circuit 241B of the control unit 24B are previously connected with each other at the shortest wiring length by one signal line 25 transmitting and receiving first to fifth pulse signals between the pulse transmitting and receiving circuits 241A and 241B. Then, the synchronous setting of the counters 22A and 22B is performed as follows according to steps S20 to S36B (timings t1 to t9 of FIG. 9) of FIG. 8 by the pulse transmitting and receiving circuits 241A and 241B, the counter control circuits 242A and 242B, the register control circuit 243A, the comparison circuit 244A, and the master 10.

In the target 20A receiving the instruction of the synchronous setting, first, the counter control circuit 242A resets the count value of the counter 22A to 0 (see step S20 of FIG. 8 and t1 of FIG. 9). After the reset of the counter 22A, the pulse transmitting and receiving circuit 241A transmits the first pulse signal (first specific signal) to the pulse transmitting and receiving circuit 241B of the target 20B through the signal line 25 (see step S21 of FIG. 8 and t2 of FIG. 9). The counter control circuit 242A starts the count operation (count up) of the counter 22A simultaneously with the transmission of the first pulse signal (see step S22 of FIG. 8 and t2 of FIG. 9). The counter control circuit 242A operates, for example, the counter 22A of 16 bits at the LSI internal clock of 500 MHz.

In the target 20B, the pulse transmitting and receiving circuit 241B returns the second pulse signal (second specific signal), which is a signal returning as soon as receiving the first pulse signal (see step S23 of FIG. 8), to the pulse transmitting and receiving circuit 241A of the target 20A through the signal line 25 (see step S24 of FIG. 8 and t3 of FIG. 9). Since the signal returns using one signal line 25, the time is required to switch the signal transmitting direction, but in the timing chart illustrated in FIG. 9, the signal returns from the pulse transmitting and receiving circuit 241B in 1 τ.

In the target 20A, when the pulse transmitting and receiving circuit 241A receives the second pulse signal from the target 20B (see step S25 of FIG. 8), the register control circuit 243A saves and stores the count value of the counter 22A at the timing when receiving the second pulse signal into the register 23A (see step S26 of FIG. 8 and t4 of FIG. 9). Here, the count value saved and held in the register 23A is a value corresponding to the reciprocal latency between the pulse transmitting and receiving circuit 241A and the pulse transmitting and receiving circuit 241B and is, for example, 0008h (hexadecimal) in the timing chart illustrated in FIG. 9.

The register control circuit 243A stores the count value into the register 23A and outputs the shift instruction to the register 23A to shift the corresponding count value by 1 bit in the least significant bit direction, thereby making the corresponding count value a half value and storing the corresponding half value into the register 23A (see step S27 of FIG. 8 and t5 of FIG. 9). Here, the held half value is a value corresponding to the one-way latency between the pulse transmitting and receiving circuit 241A and the pulse transmitting and receiving circuit 241B and is, for example, 0004h in the timing chart illustrated in FIG. 9. In this case, the pulse signal is only transmitted and received between the pulse transmitting and receiving circuits 241A and 241B by one signal line 25 and the S/P converting unit or the P/S converting unit as illustrated in FIG. 21 is not used. Therefore, the reciprocal latency (time difference) between the pulse transmitting and receiving circuit 241A and the pulse transmitting and receiving circuit 241B is made to be merely a half, such that it is possible to obtain the accurate one-way latency.

Note that, when the count value corresponding to the reciprocal latency is odd, one bit shift is performed while disregarding 1 that is a least significant bit. In the example illustrated in FIG. 9, the count value corresponding to the reciprocal latency has a small value of about 8, but actually, is a larger value counted at a smaller clock and is within the error range even when disregarding 1 that is a least significant bit and therefore, causes no problem.

When the corresponding half value is held in the register 23A, the counter control circuit 242A resets the counter 22A to 0 (see step S28 of FIG. 8 and t6 of FIG. 9) and starts the count operation of the counter 22A (see step S30 of FIG. 8 and t7 of FIG. 9). Upon starting the count operation, the pulse transmitting and receiving circuit 241A transmits the third pulse signal (third specific signal) to the pulse transmitting and receiving signal 241B of the target 20B through the signal line 25 (see step S29 of FIG. 8 and t7 of FIG. 9).

After transmitting the third pulse signal, in the target 20A, the comparison circuit 244A compares the count value by the counter 22A with the half value held in the register 23A (see step S32 of FIG. 8) whenever the counter 22A is counted up (see step S31 of FIG. 8). The processing of steps S31 and S32 is repeatedly performed until the comparison circuit 244A determines (until YES determination is made in step S33 of FIG. 8) that the count value by the counter 22A coincides with the half value held in the register 23A.

In the target 20B, when the pulse transmitting and receiving circuit 241B receives the third pulse signal (see step S34 of FIG. 8), the counter control circuit 242B resets the counter 22B to 0 (see step S35B of FIG. 8 and t8 of FIG. 9) and starts the count operation of the counter 22B (see step S36B of FIG. 8 and t9 of FIG. 9). Note that, the counter 22B of the target 20B is, for example, a counter of 16 bits which has the same configuration as the counter 22A of the target 20A and performs the count operation at the LSI internal clock of 500 MHz.

Meanwhile, in the target 20A, as the comparison result by the comparison circuit 244A, when the count value of the counter 22A reaches the half value of the register 23A (YES route of step S33 of FIG. 8), the counter control circuit 242A resets the counter 22A to 0 (see step S35A of FIG. 8 and t8 of FIG. 9) and starts the count operation of the counter 22A (see step S36A of FIG. 8 and t9 of FIG. 9).

As such, in the embodiment, the third pulse signal reaches the target 20B from the target 20A by consuming the time corresponding to the one-way latency and when the target 20B receives the third pulse signal, the count of the counter 22B starts. Meanwhile, in the target 20A, the control unit 24A transmits the third pulse signal, waits for the time corresponding to the one-way latency, and then starts the count of the counter 22A. Therefore, the counter 22A of the target 20A and the counter 22B of the target 20B simultaneously start the count (see t9 of FIG. 9).

Further, the synchronous setting of the counters 22A and 22B is performed as follows according to steps S37 to S45 (timings t10 to t12 of FIG. 9) of FIG. 8 by the pulse transmitting and receiving circuits 241A and 241B, the register control circuits 243A and 243B, the comparison circuits 244A and 244B, the packet generation circuits 245A and 245B, and the master 10. The synchronous confirmation of the embodiment is performed after and before the timing when the count values of the counters 22A and 22B overflow in the state in which the synchronous setting of the counters 22A and 22B is performed as described above.

After the count operation of the counters 22A and 22B starts, in the target 20A, the comparison circuit 244A compares (see step S38 of FIG. 8) the count value by the counter 22A with the value obtained by subtracting the half value from the overflow value of the counter 22A whenever the counter 22A is counted up (see step S37 of FIG. 8). For example, in FIG. 9, the overflow value of the counter 22A is FFFFh, and the half value held in the register 23A is 0004h, and therefore the value obtained by subtracting the half value from the overflow value is FFFDh.

When the count value by the counter 22A coincides with the value FFFDh (YES route of step S39 of FIG. 8), the coinciding timing t10 (see FIG. 9) is detected as the timing earlier by the half value than the timing when the counter 22A overflows. The pulse transmitting and receiving circuit 241A transmits a fourth pulse signal (fourth specific signal) to the pulse transmitting and receiving circuit 241B of the target 20B through the signal line 25 (see step S40 of FIG. 8 and t10 of FIG. 9) at the detected timing t10.

In the target 20B, the pulse transmitting and receiving circuit 241B returns a fifth pulse signal (fifth specific signal), which is a signal returning as soon as receiving the fourth pulse signal (see step S41 of FIG. 8), to the pulse transmitting and receiving circuit 241A of the target 20A through the signal line 25 (see step S42 of FIG. 8 and t11 of FIG. 9). Similar to step S24 described above, even in step S42, the signal returns from the pulse transmitting and receiving circuit 241B in 1 τ.

In addition, when the pulse transmitting and receiving circuit 241B receives the fourth pulse signal, the comparison circuit 244B compares the count value of the counter 22B at the timing when receiving the fourth pulse signal with 0 so as to confirm whether the count value of the counter 22B at the timing when receiving the fourth pulse signal is 0 (see step S43 of FIG. 8 and t11 of FIG. 9). In this case, the register control circuit 243B sets 0 (all-zero bit pattern) in the register 23B prior to performing the comparison by the comparison circuit 244B and reads 0 from the register 23B at the time of the comparison, such that the count value of the counter 22B and 0 are compared in the comparison circuit 244B. The count value of the counter 22B at the time of receiving the fourth pulse signal is 0000h when the counter 22A is synchronized with the counter 22B, but does not coincide with 0000h when the counter 22A is not synchronized with the counter 22B. Then, the packet generation circuit 245B generates the packet including the comparison result by the comparison circuit 244B and transmits the generated packet to the master 10 through the transmitting and receiving unit 21B and the high-speed serial transmission path 30B.

In the target 20A, when the pulse transmitting and receiving circuit 241A receives the fifth pulse signal (see step S44 of FIG. 8), the comparison circuit 244A confirms whether the count value of the counter 22A at the timing when receiving the fifth pulse signal is the same as the half value held in the register 23A (see step S45 of FIG. 8 and t12 of FIG. 9). That is, the comparison circuit 244A compares the count value of the counter 22A at the timing when receiving the fifth pulse signal with the half value read from the register 23A by the register control circuit 243A. In the example illustrated in FIG. 9, the count value of the counter 22A at the timing when receiving the fifth pulse signal is 0004h when the counter 22A is synchronized with the counter 22B, but does not coincide with 0004h when the counter 22A is not synchronized with the counter 22B. Then, the packet generation circuit 245A generates the packet including the comparison result by the comparison circuit 244A and transmits the generated packet to the master 10 through the transmitting and receiving unit 21A and the high-speed serial transmission path 30A.

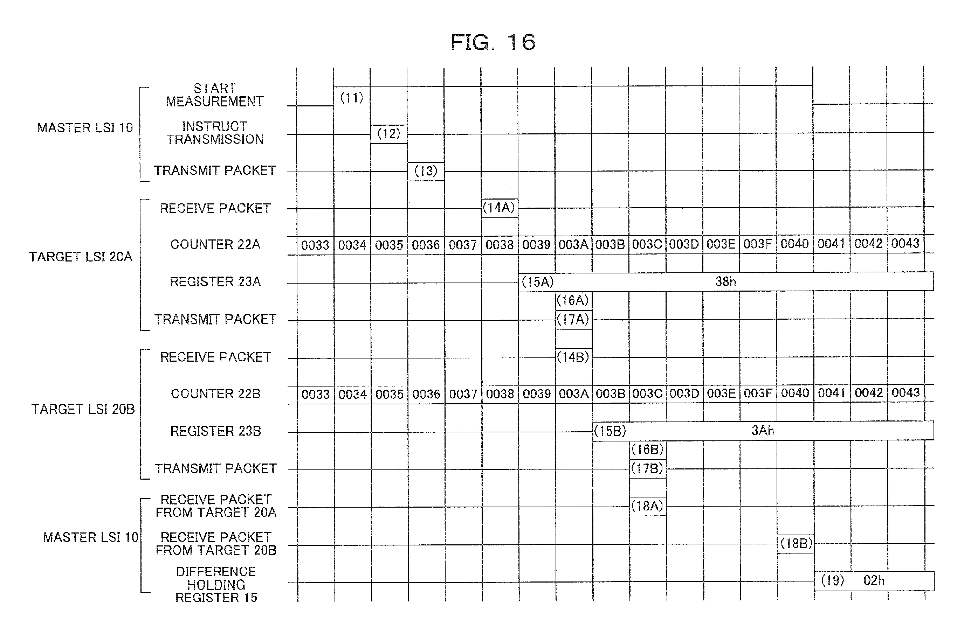

When receiving the comparison results of the comparison circuits 244A and 244B, the master 10 determines whether the count value of the counter 22A is equal to the half value while the count value of the counter 22B is 0, based on the received comparison results. When the count value of the counter 22A is equal to the half value while the count value of the counter 22B is 0, the master 10 determines that the synchronization between the count value of the counter 22A and the count value of the counter 22B is confirmed. Then, the master 10 simultaneously issues the packets for measuring latency to the targets 20A and 20B as described below with reference to FIG. 16.

Meanwhile, when the comparison circuit 244B confirms that the count value of the counter 22B is not 0 or the comparison circuit 244A confirms that the count value of the counter 22A is not equal to the half value, the control unit 24B or the control unit 24A determines that the count value of the counter 22A and the counter value of the counter 22B are not synchronized with each other. Then, the control unit 24B or the control unit 24A notifies the user and the like of the error or performs the synchronization setting of the counters 22A and 22B again. Note that, the master 10 can also confirm that the count value of the counter 22B is not 0 or the count value of the counter 22A is not equal to the half value, based on the received comparison results. When the master 10 performs the confirmation, the master 10 notifies a user and the like, of the error or transmits the instruction to perform the synchronous setting of the counters 22A and 22B again to the targets 20A and 20B through the high-speed serial transmission paths 30A and 30B.

When the synchronization of the counters 22A and 22B is confirmed by the processing (steps S37 to S45) as described above, the master 10 starts to measure the difference in one-way latency (transmitting delay difference) to be described below with reference to FIGS. 15 and 16.

As such, according to the embodiment, the master 10 may use the overflow timing to confirm whether the counters 22A and 22B are correctly synchronized with each other until the counters 22A and 22B overflow, thereby certainly synchronizing the count operation of the counters 22A and 22B.

### [3] Basic configuration and detailed operation of information processing apparatus having at least three target LSIs

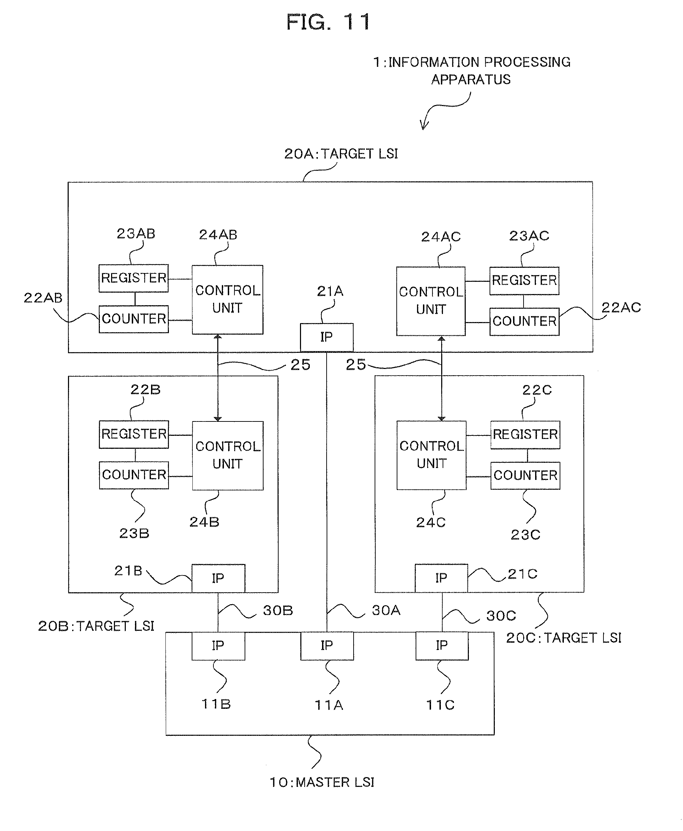

In the foregoing example, the case in which the information processing apparatus 1 has two target LSIs 20A and 20B has been described. Hereinafter, in the case in which the information processing apparatus 1 has at least three target LSIs, the basic configuration and the detailed operation of main components in each target LSI 20A to 20C will be described with reference to FIGS. 11 to 14.

### [3-1] Configuration of information processing apparatus having at least three target LSIs

FIG. 11 is a block diagram illustrating a configuration of main components in each target 20A, 20B, and 20C in the case in which the information processing apparatus has three target LSIs 20A, 20B, and 20C.

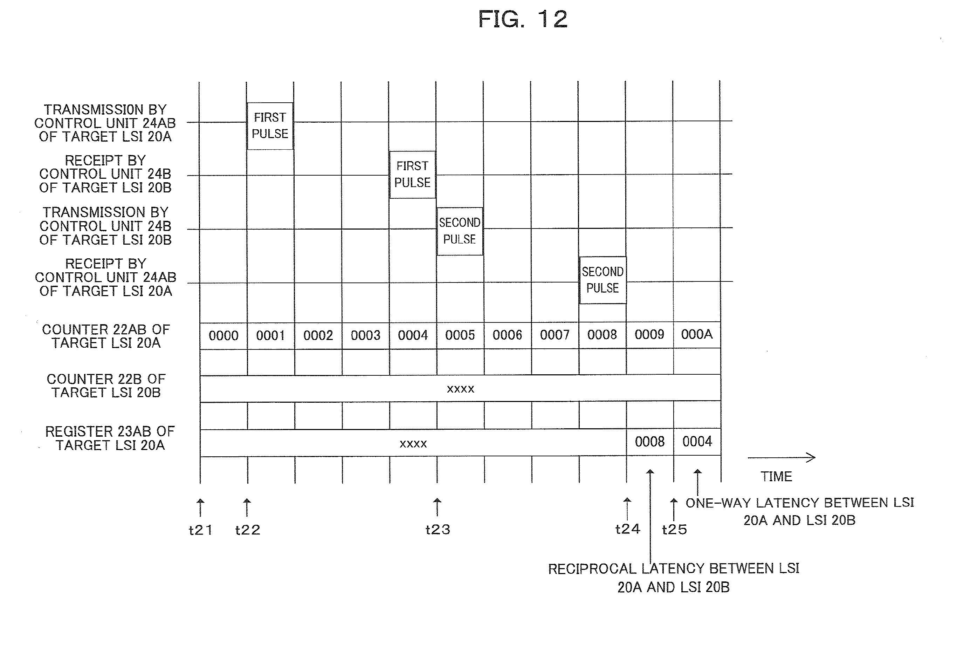

The information processing apparatus 1 illustrated in FIG. 11 includes three targets 20A, 20B, and 20C that are operable according to the packets (signals) from the master LSI 10. The master 10 and the targets 20A and 20B each are connected with each other by the foregoing high-speed serial transmission paths 30A and 30B. Similarly, the master 10 and the target 20C are connected with each other by the high-speed serial transmission path 30C and the high-speed serial transmission path 30C connects the transmitting and receiving unit (IP) 11C of the master 10 with the transmitting and receiving unit (IP) 21C of the target 20C. Note that, even in the information processing apparatus 1 illustrated in FIG. 11, the control unit 24A of the target 20A mainly performs the synchronous setting of the counters 22A to 22C as described below with reference to FIGS. 12 to 14.

The target 20A has a counter 22AB, a register 23AB, and a control unit 24AB for the target 20B and has a counter 22AC, a register 23AC, and a control unit 24AC for the target 20C. The counter 22AB, the register 23AB, and the control unit 24AB for the target 20B each are configured to be the same as the counter 22A, the register 23A, and the control unit 24A as described above, and therefore the description thereof will not be repeated. Similarly, the counter 22AC, the register 23AC, and the control unit 24AC for the target 20C each are configured to be the same as the counter 22A, the register 23A, and the control unit 24A as described above, and therefore the description thereof will not be repeated. Herein, the control unit 24AB for the target 20B and the control unit 24AC for the target 20C each are provided, but the control unit 24AB and the control unit 24AC are common and thus may be configured to be the same as the foregoing one control unit 24A.

The target 20B includes the counter 22B, the register 23B, and the control unit 24B that are described above. Further, the control unit 24AB of the target 20A and the control unit 24B of the target 20B are connected with each other by the one dedicated transmitting and receiving signal line 25 to transmit and receive the pulse signal between the control units 24AB and 24B.

Similarly, the target 20C includes the counter 22C, the register 23C, and the control unit 24C that are configured to be the same as the counter 22B, the register 23B, and the control unit 24B that are described above. Further, the control unit 24AC of the target 20A and the control unit 24C of the target 20C are connected with each other by the one dedicated transmitting and receiving signal line 25 to transmit and receive the pulse signal between the control units 24AC and 24C.

### [3-2] Detailed operation of information processing apparatus having at least three target LSIs

Next, the synchronous setting order of the counters 22A to 22C in the target LSIs 20A to 20C configured as described above will be described with reference to FIGS. 11 to 14.

First, an order (first measuring order) to measure the one-way latency between the target 20A (control unit 24AB) and the target 20B (control unit 24B) will be described with reference to the timing chart (timings t21 to t25) illustrated in FIG. 12. As illustrated in FIG. 12, the measurement of the one-way latency between the control unit 24AB and the control unit 24B is performed similar to the foregoing example with reference to FIG. 9 (timings t1 to t5).

That is, in the target 20A receiving the instruction of the synchronous setting, the control unit 24AB resets the count value of the counter 22A to 0 (see t21). After the reset of the counter 22AB, the control unit 24AB transmits the first pulse signal to the control unit 24B of the target 20B through the signal line 25 (see t22). The control unit 24AB starts the count operation of the counter 22AB simultaneously with the transmission of the first pulse signal (see t22).

In the target 20B, the control unit 24B returns the second pulse signal, which is a signal returning as soon as receiving the first pulse signal, to the control unit 24AB of the target 20A through the signal line 25 (see t23). Since the signal returns through the one signal line 25, the time is required to switch the signal transmitting direction, but even in the timing chart illustrated in FIG. 12, the signal returns from the control unit 24B in 1 τ.

In the target 20A, when the control unit 24AB receives the second pulse signal from the target 20B, the control unit 24AB saves and stores the count value of the counter 22AB at the timing when receiving the second pulse signal into the register 23AB (see t24). Here, the count value saved and held in the register 23AB is a value corresponding to the reciprocal latency between the control unit 24AB and the control unit 24B and is, for example, 0008h in the timing chart illustrated in FIG. 12.

Then, the control unit 24AB stores the count value into the register 23AB and outputs the shift instruction to the register 23AB to shift the corresponding count value by 1 bit in the least significant bit direction, thereby making the corresponding count value a half value and store the corresponding half value into the register 23AB (see t25). Here, the held half value is a value corresponding to the one-way latency between the control unit 24AB and the control unit 24B and is, for example, 0004h in the timing chart illustrated in FIG. 12. In this case, the pulse signal is only transmitted and received between the control units 24AB and 24B by the one signal line 25 and the S/P converting unit or the P/S converting unit as illustrated in FIG. 21 is not used. Therefore, the reciprocal latency (time difference) between the control unit 24AB and the control unit 24B is made to be merely a half, such that it is possible to obtain the accurate one-way latency.

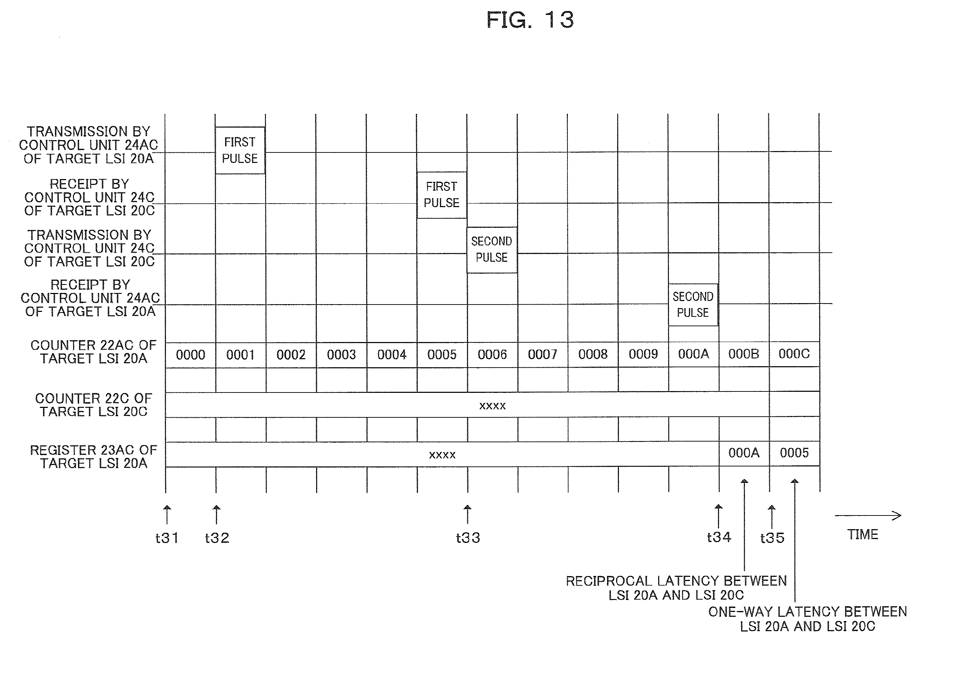

Further, an order (second measuring order) to measure the one-way latency between the target 20A (control unit 24AC) and the target 20C (control unit 24C) will be described with reference to the timing chart (timings t31 to t35) illustrated in FIG. 13. As illustrated in FIG. 13, the measurement of the one-way latency between the control unit 24AC and the control unit 24C is also performed similar to the foregoing example with reference to FIG. 9 (timings t1 to t5) or FIG. 12 (timings t21 to t25).

That is, in the target 20A receiving the instruction of the synchronous setting, the control unit 24AC resets the count value of the counter 22AC to 0 (see t31). After the reset of the counter 22AC, the control unit 24AC transmits the first pulse signal to the control unit 24C of the target 20C through the signal line 25 (see t32). The control unit 24AC starts the count operation of the counter 22AC simultaneously with the transmission of the first pulse signal (see t32).

In the target 20C, the control unit 24C returns the second pulse signal, which is a signal returning as soon as receiving the first pulse signal, to the control unit 24AC of the target 20A through the signal line 25 (see t33). Since the signal returns through the one signal line 25, the time is required to switch the signal transmitting direction, but even in the timing chart illustrated in FIG. 13, the signal returns from the control unit 24C in 1 τ.

In the target 20A, when the control unit 24AC receives the second pulse signal from the target 20C, the control unit 24AC saves and stores the count value of the counter 22AC at the timing when receiving the second pulse signal into the register 23AC (see t34). Here, the count value saved and held in the register 23AC is a value corresponding to the reciprocal latency between the control unit 24AC and the control unit 24C and is, for example, 000Ah in the timing chart illustrated in FIG. 13.

Then, the control unit 24AC stores the count value into the register 23AC and outputs the shift instruction to the register 23AC to shift the corresponding count value by 1 bit in the least significant bit direction, thereby making the corresponding count value a half value and storing the corresponding half value into the register 23AC (see t35). Here, the held half value is a value corresponding to the one-way latency between the control unit 24AC and the control unit 24C and is, for example, 0005h in the timing chart illustrated in FIG. 13. In this case, the pulse signal is only transmitted and received between the control units 24AC and 24C by the one signal line 25 and the S/P converting unit or the P/S converting unit as illustrated in FIG. 21 is not used. Therefore, the reciprocal latency (time difference) between the control unit 24AC and the control unit 24C is made to be simply a half, such that it is possible to obtain the accurate one-way latency.

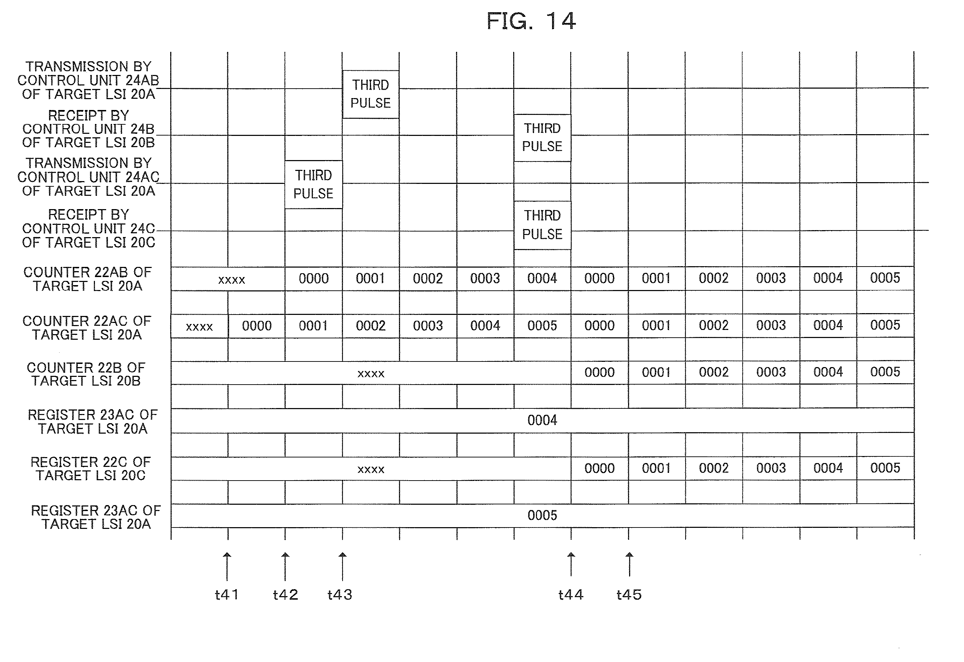

As described above, after the measurement of the one-way latency (0004h) between the control unit 24AB and the control unit 24B, and the measurement of the one-way latency (0005h) between the control unit 24AC and the control unit 24C are performed, the synchronous setting of the counters 22A to 22C by the linkage of the control units 24AB, 24AC, 24B, and 24C is performed as follows. The synchronous setting order will be described with reference to the timing chart (timings t41 to t44) illustrated in FIG. 14.

From the measurement result of the one-way latency illustrated in FIGS. 12 and 13, it can be seen that the one-way latency (0005h) from the target 20A to the target 20C is longer by 1 τ than the one-way latency (0004h) from the target 20A to the target 20B.

Therefore, in the target 20A, the control unit 24AC resets the counter 22AC to 0 earlier by 1 τ than the control unit 24AB to (see t41) and starts the count operation of the counter 22AC (see t42). Simultaneously with starting the count operation of the counter 22AC, the control unit 24AC transmits the third pulse signal to the control unit 24C of the target 20C through the signal line 25 (see t42). After the third pulse signal is transmitted to the control unit 24C, when the count value by the counter 22AC reaches a value (0005h) held in the register 23AC, the control unit 22AC resets the counter 22AC to 0 (see t44) and starts the count operation of the counter 22AC (see t45).

Similarly, in the target 20A, the control unit 24AB resets the counter 22AB to 0 slower by 1 τ than the control unit 24AB (see t42) and starts the count operation of the counter 22AB (see t43). Simultaneously with the start of the count operation of the counter 22AB, the control unit 24AB transmits the third pulse signal to the control unit 24B of the target 20B through the signal line 25 (see t43). After the third pulse signal is transmitted to the control unit 24B, when the count value by the counter 22AB reaches a value (0004h) held in the register 23AB, the control unit 22AB resets the counter 22AB to 0 (see t44) and starts the count operation of the counter 22AB (see t45).

Meanwhile, in the target 20B, when the control unit 24B receives the third pulse signal, the control unit 24B resets the counter 22B to 0 (see t44) and starts the count operation of the counter 22B (see t45).

Similarly, in the target 20C, when the control unit 24C receives the third pulse signal, the control unit 24C resets the counter 22C to 0 (see t44) and starts the count operation of the counter 22C (see t45).

According to the above order, as illustrated in FIG. 14, the counters 22AB and 22AC in the target 20A, the counter 22B in the target 20B, and the counter 22C in the target 20C simultaneously start the count and are synchronized with one another to perform the count to include the same count value (time). Note that, thereafter, the control units 24AB, 24AC, 24B, and 24C may also perform the synchronous confirmation of the counters 22AB, 22AC, 22B, and 22C in the same manner as the order described with reference to FIGS. 8 and 10.

After the counters 22AB, 22AC, 22B, and 22C are synchronized with one another, the master 10 simultaneously issues and transmits the packets for measuring latency to all the targets 20A to 20C through the high-speed serial transmission paths 30A to 30C and measures the difference in one-way latency in the same order as steps S3 to S7 of FIG. 3.

That is, in the target 20A, the count value, which is counted by the counter 22AB or 22AC when receiving the corresponding packet for measuring latency from the master 10, is written, saved, and held as a receipt-timing count value in the register 23AB or 23AC by the control unit 24AB or 24AC.

Similarly, in the targets 20B and 20C, the count values, which are counted by the counters 22B and 22C when receiving the corresponding packets for measuring latency from the master 10, are written, saved, and held in the registers 23B and 23C as a receipt-timing count value by the control units 24B and 24C.

The count value of the counter 22AB or 22AC written in the register 23AB or 23AC is notified to the master 10 by the control unit 24AB or 24AC through the transmitting and receiving unit 21A and the high-speed serial transmission path 30A. Similarly, the count values of the counters 22B and 22C held in the registers 23B and 23C each are notified to the master 10 by the control units 24B and 24C through the transmitting and receiving units 21B and 21C and the high-speed serial transmission paths 30B and 30C.

When receiving the count values from the targets 20A to 20C through the transmitting and receiving units 11A to 11C, the master 10 calculates, for example, the difference between the count value from the target 20A and the count value from the target 20B and the difference between the count value from the target 20A and the count value from the target 20C. Herein, the master 10 does not include the counters, and the like that are synchronized with the count values (time) of the counters 22AB, 22AC, 22B, and 22C in the targets 20A to 20C. Therefore, in the master 10, the count values from the targets 20A to 20C each are the one-way latency (transmitting delay) in appearance from the master 10 to each of the targets 20A to 20C. Meanwhile, the packets for measuring latency are simultaneously issued to the targets 20A to 20C from the master 10 and the counters 22AB, 22AC, 22B, and 22C of the targets 20A to 20C are synchronized with one another. Therefore, the difference calculated as described above becomes the absolute difference in one-way latency (transmitting delay difference) between the targets 20A and 20B or between the targets 20A and 20C.

Then, the master 10 determines the transmitting timing of the packets to each of the targets 20A to 20C, that is, the proper transmitting timing when the corresponding packets simultaneously or almost simultaneously reach each of the targets 20A to 20C, based on the calculated difference in one-way latency. Next, the master 10 transmits the packets to each of the targets 20A to 20C through the transmitting and receiving units 11A to 11C and the high-speed serial transmission paths 30A to 30C at the determined transmitting timing.

Note that, in FIGS. 11 to 14, the present invention describes the case in which three target LSIs (second processing units) are provided, but is not limited thereto. According to the present invention, in even when at least four target LSIs (second processing units) are provided, the synchronous setting and synchronous confirmation of the counter and the measurement of the difference in one-way latency may be performed by the same method as the foregoing method and the transmission of packets to each target LSI from the master 10 may be performed at a proper timing.

### [4] Detailed configuration and order for performing measurement of difference in one-way latency

Next, the detailed configuration and order for performing the measurement of the difference in one-way latency in the information processing apparatus 1 having two targets LSIs 20A and 20B will be described with reference to FIGS. 15 and 16.

### [4-1] Detailed configuration for performing measurement of difference in one-way latency

FIG. 15 is a block diagram illustrating an entire detailed configuration of the information processing apparatus 1 to which the configuration illustrated in FIG. 7 is applied. Note that, FIG. 15 does not illustrate the configuration (pulse transmitting and receiving circuits 241A and 241B and comparison circuits 244A and 244B) used only for the synchronous setting and synchronous confirmation processing of the counters 22A and 22B.

The information processing apparatus 1 illustrated in FIG. 15 includes the master LSI 10 and the two target LSIs 20A and 20B. The transmitting and receiving units 21A and 21B, the counters 22A and 22B, the registers 23A and 23B, and the control units 24A and 24B in the target LSIs 20A and 20B are the same as those described with reference to FIGS. 6 and 7, and therefore the description thereof will not be repeated.

The master LSI 10 includes a transmitting instruction circuit 12, a packet generation circuit 13 for measuring latency, a difference calculation circuit 14, a difference holding register 15, and a packet transmitting timing determination circuit 16, in addition to the foregoing transmitting and receiving units 11A and 11B.

When receiving the measurement start instruction of the difference in one-way latency after the synchronous setting of the counters 22A and 22B is completed, the transmitting instruction circuit 12 performs the transmitting instruction of the packets for measuring latency.

When receiving the transmitting instruction from the transmitting instruction circuit 12, the packet generation circuit 13 for measuring latency generates the packets for measuring latency and simultaneously issues and transmits the same packets to the targets 20A and 20B through the transmitting and receiving units 11A and 11B and the high-speed serial transmission paths 30A and 30B.

The difference calculation circuit 14 calculates the difference between the receipt-timing count value notified from the target 20A through the high-speed serial transmission path 30A and the receipt-timing count value notified from the target 20B through the high-speed serial transmission path 30B. The difference is the transmitting delay difference from the master 10 to each of the targets 20A and 20B, that is, the absolute difference in one-way latency between the targets 20A and 20B.

The difference holding register 15 holds the difference (difference in one-way latency) calculated by the difference calculation circuit 14.

The packet transmitting timing determination circuit 16 determines the transmitting timing of packets to the targets 20A and 20B, that is, the transmitting timing when the corresponding packets simultaneously or almost simultaneously reach the targets 20A and 20B, based on the difference in one-way latency held in the difference holding register 15.

### [4-2] Detailed measurement order of difference in one-way latency

Next, the measurement order of the difference in one-way latency by the information processing apparatus 1 configured as described above will be described with reference to reference numerals (11) to (19) of FIG. 15 and the timing charts (reference numerals (11) to (19)) illustrated in FIG. 16.

Here, prior to performing the measurement order of the difference in one-way latency illustrated in FIG. 16, it is assumed that the synchronous setting and synchronous confirmation of the counters 22A and 22B are completed and the synchronous count of the counters 22A and 22B starts, which are described above with reference to FIGS. 6 to 10.

After the synchronous setting and synchronous confirmation of the counters 22A and 22B are completed, the signal to instruct the measurement start is input to an external terminal of the master 10 (see reference numeral (11)).

When receiving the corresponding signal, the transmitting instruction circuit 12 performs the transmitting instruction of the packets for measuring latency to the packet generation circuit 13 (see reference numeral (12)).

When receiving the transmitting instruction from the transmitting instruction circuit 12, the packet generation circuit 13 generates the packets for measuring latency by the high-speed serial transmission, that is, the specific packet to instruct the measurement. Then, the packet generation circuit 13 simultaneously issues and transmits the generated packets for measuring latency to each of the targets 20A and 20B through the transmitting and receiving units 11A and 11B and the high-speed serial transmission paths 30A and 30B (see reference numeral (13)).

In the target 20A, when receiving the measurement packets (see reference numeral (14A)), the register control unit 243A inputs the enable signal to the write terminal of the register 23A and stores the count value by the counter 22A at the time of receiving the measurement packet into the register 23A (see reference numeral (15A)). In the example illustrated in FIG. 16, the receipt-timing count value held in the register 23A is 0038h. Next, the register control unit 243A inputs the enable signal to the read terminal of the register 23A and reads the receipt-timing count value (0038h) from the register 23A to the packet generation circuit 245A (see reference numeral (16A)). When receiving the receipt-timing count value (0038h), the packet generation circuit 245A generates the packet including the corresponding receipt-timing count value (0038h) and transmits the generated packet to the master 10 through the transmitting and receiving unit 21A and the high-speed serial transmission path 30A (see reference numeral (17A)).

Similarly, in the target 20B, when receiving the measurement packets (see reference numeral (14B)), the register control unit 243B inputs the enable signal to the write terminal of the register 23B and stores the count value by the counter 22B at the time of receiving the measurement packet into the register 23B (see reference numeral (15B)). In the example illustrated in FIG. 16, the receipt-timing count value held in the register 23B is 003Ah. Next, the register control unit 243B inputs the enable signal to the read terminal of the register 23B and reads the receipt-timing count value (003Ah) from the register 23B to the packet generation circuit 245B (see reference numeral (16B)). When receiving the receipt-timing count value (003Ah), the packet generation circuit 245B generates the packet including the corresponding receipt-timing count value (003Ah) and transmits the generated packet to the master 10 through the transmitting and receiving unit 21B and the high-speed serial transmission path 30B (see reference numeral (17B)).

Meanwhile, in the master 10, when the count value (0038h) from the target 20A and the count value (003Ah) from the target 20B are received through the transmitting and receiving units 11A and 11B (see reference numerals (18A) and (18B)), the difference (02h) between the count value (0038h) from the target 20A and the count value (003Ah) from the target 20B is calculated. The calculated difference is stored in the register 15 as the absolute difference in one-way latency (transmitting delay difference) between the respective targets 20A and 20B (see reference numeral (19)). In the example illustrated in FIG. 16, the transmitting time from the master 10 to the target 20B is slower by 2 τ than the transmitting time from the master 10 to the target 20A.

Then, the packet transmitting timing determination circuit 16 determines the transmitting timing of packets to each of the targets 20A and 20B, that is, the proper transmitting timing when the corresponding packets simultaneously or almost simultaneously reach each of the targets 20A and 20B, based on the difference in one-way latency held in the register 15. For example, as illustrated in FIG. 16, when the measurement result that the target 20A is slower by 2 τ than the target 20B is obtained, the master 10 transmits the corresponding packet to the target 20B and then performs the transmission of the corresponding packet to the target 20A when 2 τ lapses. Therefore, even in the information processing apparatus 1 illustrated in FIGS. 15 and 16, the same operational effects as the examples described above with reference to FIGS. 1 to 4 can be obtained.

### [5] Others

The preferred embodiments of the present invention are described in detail, but the present invention is not limited to the specific embodiments and can be variously modified and changed without departing from the gist of the present invention.

All or a part of the functions of the foregoing control units 24A to 24C and 24AB and 24AC or the circuits 12 to 14, 16, 241A to 245A, and 241B to 245B is realized by executing a predetermined application program (delay difference measurement program) by the functions as a computer (CPU, and the like) in the LSIs 10 and 20A to 20C.

The program is provided in a form recorded in computer-readable recording media such as, for example, a flexible disk, CDs (CD-ROM, CD-R, CD-RW, and the like), DVDs (DVD-ROM, DVD-RAM, DVD-R, DVD-RW, DVD+R, DVD+RW, and the like), a Blu-ray Disc, and the like. In this case, the computer reads the program from the recording media, and transmits the read program to internal memory devices or external memory devices so as to be stored and used therein.

Here, the computer is a concept including hardware and an operating system (OS) and means hardware operated under the control of OS. Further, in the case of operating hardware with an application program alone without the OS, the hardware itself corresponds to the computer. The hardware at least includes a microprocessor such as a CPU, and the like, and a unit reading a computer program recorded in a recording medium. The delay difference measuring program includes a program code so that all or a part of the functions of the foregoing control units 24A to 24C, 24AB, and 24AC or the circuits 12 to 14, 16, 241A to 245A, and 241B to 245B are realized by executing a predetermined application program (delay difference measurement program) executing functions of the LSIs 10 and 20A to 20C in the foregoing computer. Further, a part of the functions may be realized by OS, not the application program.

All examples and conditional language recited herein are intended for the pedagogical purposes of aiding the reader in understanding the invention and the concepts contributed by the inventor to further the art, and are not to be construed limitations to such specifically recited examples and conditions, nor does the organization of such examples in the specification relate to a showing of the superiority and inferiority of the invention. Although one or more embodiments of the present inventions have been described in detail, it should be understood that the various changes, substitutions, and alterations could be made hereto without departing from the spirit and scope of the invention.

## Claims

1. An information processing apparatus, comprising:
a first processing unit (10); and
a plurality of second processing units (20A, 20B) each being operable according to a signal from the first processing unit (10),
wherein each of the plurality of second processing units (20A, 20B) comprises:
a counter (22A, 22B) that counts a count value in synchronization with such a counter included in each remaining second processing unit;
a register (23A, 23B) that holds the count value of the counter (22A, 22B); and
a control unit (24A, 24B) that stores the count value, which is counted by the counter (22A, 22B) when receiving a measurement instruction from the first processing unit (10), as a receipt-timing count value into the register (23A, 23B) and notifies the first processing unit (10) of the receipt-timing count value held in the register (23A, 23B), and
the first processing unit (10) calculates one or more differences between a plurality of the receipt-timing count values notified from the plurality of second processing units (20A, 20B) as a transmitting delay difference from the first processing unit (10) to each of the plurality of second processing units (20A, 20B).

2. The information processing apparatus according to claim 1, wherein the first processing unit (10) simultaneously issues the measurement instruction to each of the plurality of second processing units (20A, 20B).

3. The information processing apparatus according to claim 1 or 2, wherein the first processing unit (10) determines a transmitting timing of the signal for the plurality of second processing units (20A, 20B) based on the calculated transmitting delay difference from the first processing unit (10) to each of the plurality of second processing units (20A, 20B).

4. The information processing apparatus according to any one of claims 1 to 3, further comprising: a signal line (25) that transmits and receives a specific signal between the control unit (24A, 24B) in each of the plurality of second processing units (20A, 20B),
wherein the control unit (24A, 24B) in each of the plurality of second processing units (20A, 20B) transmits and receives the specific signal to and from another control unit in another second processing unit through the signal line (25) and controls the counter (22A, 22B) and the register (23A, 23B) according to a transmitting timing or a receiving timing of the specific signal to make the count value of the counter (22A, 22B) in each of the plurality of second processing units (20A, 20B) equal.

5. The information processing apparatus according to claim 4, wherein the control unit (hereinafter, referred to as one control unit) in one second processing unit among the plurality of second processing units (20A, 20B) transmits a first specific signal to the control unit (hereinafter, referred to as another control unit) in another second processing unit among the plurality of second processing units (20A, 20B) through the signal line (25) and starts a count operation of the counter (hereinafter, referred to as one counter) in the one second processing unit,
the another control unit returns a second specific signal to the one control unit through the signal line (25) when receiving the first specific signal,
the one control unit stores a half value of the count value of the one counter into the register (hereinafter, referred to as one register) in the one second processing unit at the timing when the one control unit receives the second specific signal, resets the one counter, and then starts the count operation of the one counter while transmitting a third specific signal to the another control unit through the signal line (25),
the another control unit resets the counter (hereinafter, referred to as another counter) in the another second processing unit at the receiving timing when the another control unit receives the third specific signal and then starts the count operation of the another counter, and
the one control unit resets the one counter at the timing when the count value of the one counter reaches the half value of the one register and then starts the count operation of the one counter.

6. The information processing apparatus according to claim 5, wherein the one control unit transmits a fourth specific signal to the another control unit through the signal line (25) at the timing earlier by the half value held in the one register than the timing when the count value of the one counter overflows,
the another control unit confirms whether the count value of the another counter is 0 at the timing when the another control unit receives the fourth specific signal and returns a fifth specific signal to the one control unit through the signal line (25), and
the one control unit confirms whether the count value of the one counter is the same as the half value held in the one register at the timing when the one control unit receives the fifth specific signal.

7. The information processing apparatus according to claim 6, wherein when the another control unit confirms that the count value of the another counter is 0 and the one control unit confirms that the count value of the one counter is the same as the half value, the first processing unit simultaneously issues the measurement instruction to each of the plurality of second processing units (20A, 20B).

8. The information processing apparatus according to claim 6, wherein when the another control unit confirms that the count value of the another counter is not 0 or the one control unit confirms that the count value of the one counter is not the same as the half value, the another control unit or the one control unit performs an error notification or performs again the processing of making the count value of the counter (22A, 22B) in each of the plurality of second processing units (20A, 20B) equal.

9. A method of measuring, in an information processing apparatus (1) including a first processing unit (10) and a plurality of second processing units (20A, 20B) each being operable according to a signal from the first processing unit (10), a transmitting delay difference from the first processing unit (10) to each of the plurality of second processing units (20A, 20B), the method comprising:
at each of the plurality of second processing units (20A, 20B), counting a count value by a counter (22A, 22B) included in each of the plurality of second processing units (20A, 20B), storing the count value, which is counted by the counter (22A, 22B) when receiving a measurement instruction from the first processing unit (10), as a receipt-timing count value into a register (23A, 23B), and notifying the first processing unit (10) of the receipt-timing count value held by the register (23A, 23B), and
at the first processing unit (10), calculating one or more differences between a plurality of the receipt-timing count values notified from the plurality of second processing units (20A, 20B) as the transmitting delay difference from the first processing unit (10) to each of the plurality of second processing units (20A, 20B).

10. The method of measuring delay difference according to claim 9, further comprising:
at the first processing unit (10), simultaneously issuing the measurement instruction to each of the plurality of second processing units (20A, 20B).

11. The method of measuring delay difference according to claim 9 or 10, further comprising:
at each of the plurality of second processing units (20A, 20B), transmitting and receiving a specific signal to and from another second processing unit through a signal line (25), and controlling the counter (22A, 22B) and the register (23A, 23B) according to a transmitting timing or a receiving timing of the specific signal to make the count value of the counter (22A, 22B) in each of the plurality of second processing units (20A, 20B) equal.

12. The method of measuring delay difference according to claim 11, further comprising:
at one second processing unit among the plurality of second processing units (20A, 20B), transmitting a first specific signal to another second processing unit among the plurality of second processing units (20A, 20B) through the signal line (25), and starting a count operation of the counter (hereinafter, referred to as one counter) in the one second processing unit,
at the another second processing unit, when receiving the first specific signal, returning a second specific signal to the one second processing unit through the signal line (25),
at the one second processing unit, storing a half value of the count value of the one counter into the register (hereinafter, referred to as one register) in the one second processing unit at the timing when receiving the second specific signal, resetting the one counter, and then starting the count operation of the one counter while transmitting a third specific signal to the another second processing unit through the signal line (25),
at the another second processing unit, resetting the counter (hereinafter, referred to as another counter) in the another second processing unit at the timing when receiving the third specific signal and then starting the count operation of the another counter, and
at the one second processing unit, resetting the one counter at the timing when the count value of the one counter reaches the half value of the one register and then starting the count operation of the one counter.

13. The method of measuring delay difference according to claim 12, further comprising:
at the one second processing unit, transmitting a fourth specific signal to the another second processing unit through the signal line (25) at the timing earlier by the half value held in the one register than the timing when the count value of the one counter overflows,
at the another second processing unit, confirming whether the count value of the another counter is 0 at the timing when receiving the fourth specific signal and returning a fifth specific signal to the one second processing unit through the signal line (25), and
at the one second processing unit, confirming whether the count value of the one counter is the same as the half value held in the one register at the timing when receiving the fifth specific signal.

14. The method of measuring delay difference according to claim 13, further comprising:
at the first processing unit (10), when the another second processing unit confirms that the count value of the another counter is 0 and the one second processing unit confirms that the count value of the one counter is the same as the half value, simultaneously issuing the measurement instruction to each of the plurality of second processing units (20A, 20B).

15. A program that causes an information processing apparatus (1), including a first processing unit (10) and a plurality of second processing units (20A, 20B) each being operable according to a signal from the first processing unit (10), to execute a process of measuring a transmitting delay difference from the first processing unit (10) to each of the plurality of second processing units (20A, 20B), the process comprising:
at each of the plurality of second processing units (20A, 20B),
counting a count value by a counter (22A, 22B) included in each of the plurality of second processing units (20A, 20B) in synchronization with such a counter included in each remaining second processing unit;
storing the count value, which is counted by the counter when receiving a measurement instruction from the first processing unit, as a receipt-timing count value into a register (23A, 23B); and
notifying the first processing unit (10) of the receipt-timing count value held by the register (23A, 23B), and
at the first processing unit (10),
calculating one or more differences between a plurality of the receipt-timing count values notified from the plurality of second processing units (20A, 20B) as the transmitting delay difference from the first processing unit (10) to each of the plurality of second processing units (20A, 20B).
